(19) Europäisches Patentamt
European Patent Office
Office européen des brevets

(11) **EP 4 592 119 A1**

(12) **EUROPÄISCHE PATENTANMELDUNG**

(43) Veröffentlichungstag:
   **30.07.2025   Patentblatt 2025/31**

(21) Anmeldenummer: **25151626.6**

(22) Anmeldetag: **14.01.2025**

(51) Internationale Patentklassifikation (IPC):
   **B60K 17/346** (2006.01)      **B60K 6/365** (2007.10)
   **B60K 6/387** (2007.10)      **B60K 6/442** (2007.10)
   **B60K 6/48** (2007.10)      **B60K 6/52** (2007.10)
   **B60K 23/08** (2006.01)

(52) Gemeinsame Patentklassifikation (CPC):
   **B60K 17/3462; B60K 6/365; B60K 6/387;**
   **B60K 6/442; B60K 6/48; B60K 6/52; B60K 23/08;**
   B60K 2006/4808; B60Y 2200/221

(84) Benannte Vertragsstaaten:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Benannte Erstreckungsstaaten:
   **BA**
   Benannte Validierungsstaaten:
   **GE KH MA MD TN**

(30) Priorität:  **29.01.2024   DE 102024102491**

(71) Anmelder: **Deere & Company**
   **Moline, IL 61265 (US)**

(72) Erfinder:
   • **Letscher, Jens**
    **Mannheim (DE)**
   • **Fritz, Norbert**
    **Mannheim (DE)**
   • **Flemming, Axel**
    **Mannheim (DE)**

(74) Vertreter: **Stein, Stefan**
   **John Deere GmbH & Co. KG**
   **Global Intellectual Property Services**
   **John-Deere-Straße 70**
   **68163 Mannheim (DE)**

(54) **LEISTUNGSVERZWEIGTER ACHSANTRIEB, LANDWIRTSCHAFTLICHES ZUGFAHRZEUG UND VERFAHREN ZUM BETREIBEN EINES LEISTUNGSVERZWEIGTEN ACHSANTRIEBS**

(57)    Die Erfindung betrifft einen leistungsverzweigten Achsantrieb (20) für ein Zugfahrzeug (10) umfassend eine Steuereinheit (42) und zumindest ein Leistungsverzweigungsgetriebe (52), wobei das Leistungsverzweigungsgetriebe (52) mit einer zweiten Fahrzeugachse (28) und einem Hauptgetriebe (24) verbunden ist und über eine zweite Welle (W2) mit einer ersten Fahrzeugachse (26) verbunden ist. Ein erstes Zusatzantriebselement (50) ist mit dem Leistungsverzweigungsgetriebe (52) verbunden oder verbindbar. Die Steuereinheit (42) ist konfiguriert eine Drehzahl am Ausgang des Hauptgetriebes (24) zu ermitteln, und einen Vorlauffaktor ($\chi_{Vorlauf}$) in Abhängigkeit von einem Lenkwinkel ($\alpha$) der ersten Fahrzeugachse (26) zu ermitteln, und eine Solldrehzahl des ersten Zusatzantriebselements (50) in Abhängigkeit von der Drehzahl des Hauptgetriebes (24) und einem Korrekturfaktor (K) und dem Vorlauffaktor ($\chi_{Vorlauf}$) zu ermitteln, und eine Steuer-Operation am leistungsverzweigten Achsantrieb (20) in Abhängigkeit von der Solldrehzahl durchzuführen. Die Erfindung betrifft weiter ein landwirtschaftliches Zugfahrzeug und ein Verfahren zum Betreiben eines leistungsverzweigten Achsantriebs.

FIG. 1

EP 4 592 119 A1

**Beschreibung**

Die Erfindung betrifft einen leistungsverzweigten Achsantrieb gemäss dem Oberbegriff des unabhängigen Anspruchs 1 und ein landwirtschaftliches Zugfahrzeug gemäss dem Oberbegriff des unabhängigen Anspruchs 12 und ein Verfahren zum Betreiben eines leistungsverzweigten Achsantriebs gemäss dem Oberbegriff des unabhängigen Anspruchs 14.

Die DE 10 2007 021 732 A1 offenbart einen leistungsverzweigten Achsantrieb für Fahrzeuge mit mindestens zwei antreibbaren Fahrzeugachsen, insbesondere für Nutzfahrzeuge und landwirtschaftliche Fahrzeuge. Aus der EP 3 626 502 A1 ist ein landwirtschaftliches Fahrzeug mit einem leistungsverzweigten Achsantrieb bekannt. Der leistungsverzweigte Achsantrieb umfasst einen Teilantriebsstrang mit einem Zusatzantriebselement, einen Elektromotor. Die DE 10 2013 224 383 A1, EP 4 215 392 A1 und die EP 4 215 393 A1 offenbaren ebenfalls einen leistungsverzweigte Achsantrieb mit einem Leistungsverzweigungsgetriebe und einem Zusatzantriebselement, der auf den Vorlauf einer Fahrzeugachse einwirkt.

Die bekannten leistungsverzweigten Achsantriebe weisen nachteilhafterweise eine rein mechanische Verbindung des Getriebes mit der Vorder- und Hinterachse auf. Lediglich die Vorderachse kann durch eine Allrad-Kupplung entweder komplett vom Antriebsstrang entkoppelt oder zugeschaltet werden. Auf Grund dieser mechanischen Verbindung zwischen den beiden Achsen entsteht beim Zuschalten der ersten Fahrzeugachse, insbesondere der Vorderachse, einen Vorlauf der ersten Fahrzeugachse (die sich im definierten Bereich von ca. 1.5 bis 4 Prozent befinden soll). Diese Anforderung soll verhindern, dass bei Geradeausfahrt die erste Fahrzeugachse eine bremsende Wirkung hat und somit sich die Fahrstabilität verschlechtert. Nachteile der bekannten Ausführungen sind:

- Kurvenfahrt auf der Straße mit zugeschalteten Allrad-Antrieb: Größerer Wendekreis mit höherem Verschleiß der Vorderachsbereifung, da die Voreilung hier zu gering ist und die Vorderachse den Traktor bremst. Benötigter Vorlauf bei Kurvenfahrt >4%
- Kurvenfahrt: Größerer Lenkradius bei aktiviertem Allradantrieb. Dieses Verhalten führt zu einer Vergrößerung des Vorgewendes bzw. des Wendekreises.
- Arbeiten im Grasland: Der definierte Vorlauf verursacht bei Arbeiten mit aktiviertem Allradantrieb eine Zerstörung der Grasnarbe.
- Arbeiten mit dem Frontlader: Der Verschleiß der Vorderräder wird besonders durch die Kombination mit hoher Last und dem Vorlauf der Vorderachse negativ verstärkt.

Ausgehend von diesem Stand der Technik ist es daher eine Aufgabe der vorliegenden Erfindung einen leistungsverzweigten Achsantrieb, ein landwirtschaftliches Zugfahrzeug und ein Verfahren zum Betreiben eines leistungsverzweigten Achsantriebs vorzuschlagen, welche die aus dem Stand der Technik bekannten Nachteile weitgehend vermeiden.

Der vorliegenden Erfindung liegt daher die Aufgabe zugrunde einen leistungsverzweigten Achsantrieb und ein landwirtschaftliches Zugfahrzeug sowie ein Verfahren vorzuschlagen, durch welche die vorgenannten Probleme überwunden werden. Insbesondere sollen ein leistungsverzweigter Achsantrieb und ein landwirtschaftliches Zugfahrzeug sowie ein Verfahren vorgeschlagen werden, die konstruktiv einfacher und/oder weniger aufwändig ausgestaltet sind und/oder eine bedarfsgerechte Anpassung des Vorlaufs der Vorderachse, also insbesondere der Drehzahl oder des Drehmoments eines ersten Zusatzantriebselements eines Leistungsverzweigungsgetriebes ermöglicht, bevorzugt auf unterschiedliche Bodenbeschaffenheiten und/oder verschiedene Lenkwinkel.

Diese Aufgabe wird durch einen leistungsverzweigten Achsantrieb mit den Merkmalen des Anspruchs 1 und ein landwirtschaftliches Zugfahrzeug mit den Merkmalen des Anspruchs 12 und ein Verfahren zum Betreiben eines leistungsverzweigten Achsantriebs mit den Merkmalen des Anspruchs 14 gelöst.

Die abhängigen Ansprüche beziehen sich auf besonders vorteilhafte Ausführungsformen der Erfindung.

Erfindungsgemäss wird ein leistungsverzweigter Achsantrieb für ein landwirtschaftliches Zugfahrzeug vorgeschlagen. Der Achsantrieb umfasst eine Steuereinheit, ein erstes Zusatzantriebselement, das mit der Steuereinheit verbunden ist, eine erste Fahrzeugachse, eine zweite Fahrzeugachse und ein Hauptantriebselement zur Bereitstellung eines Drehmoments, und/oder insbesondere eine Drehzahl und/oder einer Kraft. Das Drehmoment ist, insbesondere mit einer ersten Welle, auf ein Hauptgetriebe übertragbar. Das Hauptgetriebe ist mit der zweiten Fahrzeugachse verbunden, insbesondere antreibbar verbunden und/oder mechanisch gekoppelt oder koppelbar. Im Speziellen ist die zweiten Fahrzeugachse über eine oder mit einer dritten Welle mit dem Hauptgetriebe verbunden, insbesondere antreibbar verbunden und/oder mechanisch gekoppelt oder koppelbar. Mit oder durch das Hauptantriebselement kann also ein Drehmoment, und/oder insbesondere eine Drehzahl und/oder eine Kraft erzeugbar sein, welche(s) mit der ersten oder über die erste Welle in das Hauptgetriebe und vom Hauptgetriebe, insbesondere mit der dritten oder über die dritte Welle, in die oder an die zweite Fahrzeugachse einleitbar oder übertragbar ist. Der Achsantrieb weist ausserdem ein Leistungsverzweigungsgetriebe auf, wobei das Leistungsverzweigungsgetriebe, insbesondere durch oder über einen ersten Stirnradsatz, mit der zweiten Fahrzeugachse und dem Hauptgetriebe, insbesondere über die dritte Welle, verbunden ist, insbesondere antreibbar verbunden und/oder mechanisch gekoppelt oder koppelbar ist, und über eine zweite Welle mit der ersten Fahrzeugachse verbunden, insbesondere antreibbar verbunden und/oder mechanisch gekoppelt oder koppelbar ist. Im Speziellen ist der erste Stirnradsatz über die dritte Welle mit der zweiten Fahrzeugachse und dem Hauptgetriebe verbunden, insbesondere antreibbar verbunden und/oder mechanisch gekoppelt oder koppelbar.

Das erste Zusatzantriebselement ist, insbesondere mit bzw. durch oder über ein erstes Schaltelement, mit dem Leistungsverzweigungsgetriebe verbindbar oder verbunden. Das erste Zusatzantriebselement ist also, insbesondere zur Einleitung einer Drehzahl und/oder einer Kraft und/oder eines Drehmoments, mit dem Leistungsverzweigungsgetriebe verbindbar oder verbunden. Im Speziellen kann das erste Zusatzantriebselement über das erste oder mit dem ersten Schaltelement mit dem Leistungsverzweigungsgetriebe verbindbar oder verbunden, bevorzugt lösbar verbindbar oder verbunden, besonders bevorzugt lösbar drehfest verbindbar oder verbunden sein. Mit dem ersten Zusatzantriebselement kann, insbesondere wenn es mit dem Leistungsverzweigungsgetriebe verbunden ist, eine Drehzahl und/oder eine Kraft und/oder ein Drehmoment der ersten Fahrzeugachse steuerbar und/oder regelbar, insbesondere einstellbar und/oder verstellbar sein.

Die Steuereinheit ist konfiguriert:

- eine Drehzahl am Ausgang des Hauptgetriebes zu ermitteln
- einen Vorlauffaktor in Abhängigkeit von einem Lenkwinkel der ersten Fahrzeugachse oder einem Lenkwinkel der ersten und zweiten Fahrzeugachse zu ermitteln,
- eine Solldrehzahl des ersten Zusatzantriebselements in Abhängigkeit von der Drehzahl am Ausgang des Hauptgetriebes und einem Korrekturfaktor und dem Vorlauffaktor zu ermitteln, und
- Eine Steuer-Operation am leistungsverzweigten Achsantrieb, insbesondere dem ersten Zusatzantriebselement, in Abhängigkeit von der Solldrehzahl durchzuführen.

Mit anderen Worten, der Achsantrieb ist mittels der Steuereinheit derart betreibbar und/oder einstellbar und/oder verstellbar, dass eine Drehzahl am Ausgang des Hauptgetriebes ermittelbar ist, ein Vorlauffaktors in Abhängigkeit von einem Lenkwinkel der ersten Fahrzeugachse oder der ersten und/oder zweiten Fahrzeugachse ermittelbar ist, eine Solldrehzahl des ersten Zusatzantriebselements in Abhängigkeit von der Drehzahl am Ausgang des Hauptgetriebes und einem Korrekturfaktor und dem Vorlauffaktor ermittelbar ist, und mittels der Steuereinheit die Solldrehzahl des ersten Zusatzantriebselement einstellbar und/oder verstellbar ist.

Unter verbunden kann im Folgenden insbesondere antreibbar verbunden und/oder mechanisch gekoppelt oder koppelbar verstanden werden. Unter verbunden, bevorzugt unter antreibbar verbunden und/oder mechanisch gekoppelt kann im Speziellen also eine Verbindung von zwei Komponenten des Achsantriebs verstanden werden, die es ermöglicht, eine Kraft und/oder ein Drehmoment und/oder eine Drehzahl, insbesondere eine Drehzahl, von der einen Komponente auf die andere Komponente auf mechanischem Weg zu übertragen. Dabei können die zwei Komponenten mechanisch gekoppelt oder entkoppelt sein. Zwischen den zwei Komponenten können dabei weitere Komponenten oder Bauteile vorgesehen sein, die solch eine Kraft- und/oder Drehmomentübertragung und/oder Übertragung einer Drehzahl zwischen den zwei Komponenten ermöglichen. Unter einer Welle ist nachfolgend nicht ausschließlich, drehbar gelagertes Maschinenelement, beispielsweise ein zylindrisches Maschinenelement, zur Übertragung von Drehzahlen und/oder Drehmomenten zu verstehen, sondern vielmehr sind hierunter auch allgemeine Verbindungselemente zu verstehen, die einzelne Bauteile oder Elemente miteinander verbinden.

Der erste Stirnradsatz kann ein erstes Zahnradpaar, insbesondere ein erstes und ein zweites Festrad umfassen. Das erste Festrad kann mit dem Hauptgetriebe und/oder der zweiten Fahrzeugachse oder mit der dritten Welle verbunden sein. Das zweite Festrad kann mit dem Leistungsverzweigungsgetriebe, insbesondere, wenn dieses ein Planetengetriebe ist, mit einem Hohlrad bzw. Umlaufrad verbunden sein, bevorzugt drehfest verbunden sein.

Der leistungsverzweigte Achsantrieb kann ein erstes Differential, insbesondere ein Vorderachsdifferential, umfassen. Das erste Differential kann über die zweite oder mit der zweiten Welle mit dem Leistungsverzweigungsgetriebe verbunden sein. Dadurch kann eine Drehzahl und/oder eine Kraft und/oder ein Drehmoment des Leistungsverzweigungsgetriebes mit dem ersten oder über das erste Differential in oder an die erste Fahrzeugachse und/oder umgekehrt einleitbar oder übertragbar sein. Der leistungsverzweigte Achsantrieb kann auch ein zweites Differential, insbesondere ein Hinterachsdifferential, umfassen. Das zweite Differential kann über die dritte oder mit der dritten Welle mit dem Hauptgetriebe verbunden sein. Dadurch kann eine Drehzahl und/oder eine Kraft und/oder ein Drehmoment des Hauptgetriebes mit oder über das zweite Differential in oder an die zweite Fahrzeugachse und/oder umgekehrt einleitbar oder übertragbar sein.

Das erste Schaltelement kann betätigbar, bevorzugt selektiv betätigbar, besonders bevorzugt schliessbar und öffenbar sein. Im Speziellen kann das erste Schaltelement als erste Kupplung ausgeführt sein. Bevorzugt handelt es sich bei den Schaltelementen, insbesondere Kupplungen, um reibschlüssige Elemente oder eine Klauenkupplung. Dabei kann über einen Aktuator eine Kraft auf die Verbindungsstelle der beiden Bauteile eingeleitet wird, wodurch eine Reibkraft entsteht, durch welche eine Drehzahl und/oder oder eine Kraft und/oder ein Drehmoment zwischen den zwei drehbeweglichen Bauteilen übertragbar ist. Im Folgenden kann unter einem nicht betätigten Schaltelement, insbesondere einer nicht betätigten Kupplung, ein geöffnetes Schaltelement, insbesondere eine geöffnete Kupplung, verstanden werden.

Unter einem betätigten Schaltelement, insbesondere einer betätigten Kupplung, kann im Folgenden ein geschlossenes Schaltelement, insbesondere eine geschlossene Kupplung verstanden werden. Die beiden Bauteile rotieren dementsprechend mit gleicher Drehzahl in dieselbe Richtung. Die Schaltelemente, insbesondere Kupplungen, können auch als formschlüssige Elemente ausgeführt sein. Der Aktuator zum Betätigen des ersten Schaltelements, insbesondere der ersten Kupplung, kann hydraulisch, elektromechanisch, elektromagnetisch oder beispielsweise auch pneumatisch betätigbar ausgeführt sein. Der Aktuator, insbesondere ein erster Aktuator kann das erste Schaltelement und/oder ein zweiter Aktuator kann das zweite Schaltelement und/oder ein dritter Aktuator kann das dritte Schaltelement schliessen und öffnen.

Das erste Zusatzantriebselement kann also mit dem geschlossenen ersten Schaltelement derart mit dem Leistungsverzweigungsgetriebe verbunden sein, dass das Leistungsverzweigungsgetriebe mit dem ersten Zusatzantriebselement antreibbar ist. Dabei kann das erste Zusatzantriebselement auf das Leistungsverzweigungsgetriebe einwirken, sodass ein Vorlauf der ersten Fahrzeugachse einstellbar und/oder verstellbar ist, insbesondere auch erhöhbar ist.

Bei dem Hauptantriebselement handelt es sich in bevorzugter Weise um eine Verbrennungskraftmaschine, beispielsweise einen mit Gas, Benzin oder Dieselkraftstoff betriebenen Motor. Alternativ kann das Hauptantriebselement jedoch auch in Form einer elektrischen Maschine, beispielsweise einen Elektromotor, realisiert werden. Bei dem ersten Zusatzantriebselement handelt es sich bevorzugt um eine elektrische Maschine, beispielsweise einen Elektromotor. Darüber hinaus ist auch eine Ausführung in Form eines hydraulischen Antriebs, beispielsweise einem hydrostatischen Antriebselement, denkbar. Das erste Zusatzantriebselement kann zwei Drehrichtungen (erste Richtung, zweite Richtung) aufweisen. Die zwei Drehrichtung des ersten Zusatzantriebselements können genutzt werden, um somit einen größeren Regelbereich des Vorlaufs der ersten Fahrzeugachse zu erzielen.

Der leistungsverzweigte Achsantrieb kann auch ein zweites Zusatzantriebselement umfassen. Das zweite Zusatzantriebselement kann mit dem Hauptantriebselement, insbesondere über oder mit der ersten Welle, verbunden sein. Die vom Hauptantriebselement erzeugbare Kraft und/oder die erzeugbare Drehzahl und/oder das erzeugbare Drehmoment ist in oder an das zweite Zusatzantriebselement und/oder das Hauptgetriebe einleitbar oder übertragbar. Das Hauptantriebselement kann bevorzugt über eine Übersetzungsstufe, beispielsweise einen Riemen- oder Kettentrieb oder einen Stirnradsatz mit zwei Federrädern oder eine Welle, mit dem zweiten Zusatzantriebselement verbunden sein. Das zweite Zusatzantriebselement kann zwei Drehrichtungen (erste Richtung, zweite Richtung) aufweisen. Bei dem zweiten Zusatzantriebselement handelt es sich bevorzugt um eine elektrische Maschine, besonders bevorzugt einen Elektromotor. Darüber hinaus ist auch eine Ausführung in Form eines hydraulischen Antriebs, beispielsweise einem hydrostatischen Antriebselement, denkbar. Das zweite Zusatzantriebselement kann über die Verbindungsleitung mit einem Speicherelement und/oder dem ersten Zusatzantriebselement leistungselektronisch verbunden sein. Das zweite Zusatzantriebselement kann ausserdem, insbesondere über die Verbindungsleitung oder eine weitere Verbindungsleitung, mit einem Nebenabtrieb leistungselektronisch verbunden sein.

Unter einer leistungselektronischen Verbindung kann verstanden werden, dass erzeugte elektrische Energie, beispielsweise aus dem ersten und/oder zweiten Zusatzantriebselement, beziehungsweise gespeicherte elektrische Energie, beispielsweise aus dem Speicherelement, einer anderen Komponente, beispielsweise dem ersten und/oder zweiten Zusatzantriebselement und/oder dem Nebenabtrieb, zugeführt werden kann. Ebenso kann gespeicherte elektrische Energie, beispielsweise aus dem Speicherelement, einer der Komponenten zugeführt werden. Der Nebenabtrieb ist dabei, ebenso wie das Speicherelement, optional vorgesehen. Darüber hinaus sind jedoch auch Ausführungen mit mehr als einem Nebenabtrieb denkbar. Es sind auch Ausführungen von leistungsverzweigten Achsantrieben denkbar, bei denen dem Speicherelement nur dann Energie entnommen oder erzeugt wird, wenn diese, beispielsweise für den direkten Betrieb des Nebenabtriebs und/oder des ersten Zusatzantriebselements, benötigt wird. Das erste und/oder zweite Zusatzantriebselement können sowohl generatorisch, als auch motorisch betreibbar sein. Im generatorischen Betrieb wirkt das Zusatzantriebselement bremsend, das heißt, dass eine mechanische Energie in eine elektrische Energie umgewandelt wird. Im Gegensatz dazu kann im motorischen Betrieb elektrische Energie in mechanische Energie umgewandelt werden. Das erste und zweite Zusatzantriebselement können gleichzeitig beide generatorisch betrieben werden, beide motorisch betrieben werden oder eines generatorisch und eines motorisch betrieben werden.

In einem "Vorlauf" Betriebsmodus kann das zweite Zusatzantriebselement generatorisch und das erste Zusatzantriebselement motorisch betrieben werden. Das zweite Zusatzantriebselement kann generatorisch betreibbar sein. Diese elektrische Energie kann zum Betreiben des Nebenabtriebs, bevorzugt elektrischen Nebenabtriebs verwendet werden und/oder elektrische Energie kann in dem optionalen Speicherelement gespeichert werden und/oder die elektrische Energie kann dem ersten Zusatzantriebselement bereitgestellt werden. Dadurch kann vorteilhafterweise der Betrieb des leistungsverzweigten Achsantriebs energieeffizienter ausgestaltet werden.

Das zweite Zusatzantriebselement kann, wenn es motorisch betrieben wird, zusätzlich zu der durch das Hauptantriebselement eingeleiteten Drehzahl und/oder Kraft und/oder dem eingeleiteten Drehmoment ebenfalls eine Drehzahl und/oder Kraft und/oder ein Drehmoment in das Hauptgetriebe einleiten. Somit kann beispielsweise kurzzeitig eine Erhöhung der Antriebsleistung erfolgen, soweit dies durch den jeweiligen Fahrzustand erforderlich ist.

Zum Laden des Speicherelements können beispielsweise aber auch das erste Zusatzantriebselement und/oder das zweite Zusatzantriebselement generatorisch betrieben werden, insbesondere in einem "Generator" Betriebsmodus oder Fahr- oder Schubbetrieb. Dazu kann mit dem Hauptantriebselement eine Drehzahl und/oder eine Kraft und/oder ein Drehmoment in das zweite Zusatzantriebselement und über das Hauptgetriebe in das Leistungsverzweigungsgetriebe und weiter in das erste Zusatzantriebselement eingeleitet oder übertragen werden.

Zwischen dem ersten Zusatzantriebselement und dem Leistungsverzweigungsgetriebe kann ausserdem eine erste Bremse angeordnet sein. Die erste Bremse kann auf der Vorgelegewelle angeordnet sein. Die erste Bremse kann zumindest teilweise oder vollständig mit der Vorgelegewelle verbunden sein, bevorzugt drehfest verbunden sein. Die Vorgelegewelle kann mit der ersten Bremse gegen Drehung haltbar oder gehemmt sein, bevorzugt lösbar gegen Drehung haltbar oder gehemmt sein. Der Aktuator zum Betätigen der Bremse kann hydraulisch, elektromechanisch, elektromagnetisch oder beispielsweise auch pneumatisch betätigbar ausgeführt sein. Der Aktuator zur Betätigung der Bremse kann dabei wie der Aktuator zur Betätigung der Schaltelemente ausgeführt sein, und insbesondere umgekehrt funktionieren. Vorteilhafterweise kann mit der ersten Bremse, wie bereits oben beschrieben, ein Fahrzustand realisierbar sein, bei dem eine starre Verbindung zwischen der ersten und zweiten Fahrzeugachse erforderlich ist. In diesem Fall muss das erste Zusatzantriebselement nicht permanent einen Gegenmoment aufbauen und somit elektrische Energie verbrauchen. Alternativ zur ersten Bremse kann der leistungsverzweigte Achsantrieb auch ein drittes Schaltelement umfassen. In diesem Fall wird keine erste Bremse verwendet, sondern das dritte Schaltelement. Das dritte Schaltelement kann betätigbar, bevorzugt selektiv betätigbar, besonders bevorzugt schliessbar und öffenbar sein. Das dritte Schaltelement kann als dritte Kupplung ausgebildet sein. Wenn das dritte Schaltelement geschlossen ist, führt dies zu einer Blockierung des Leistungsverzweigungsgetriebes, insbesondere dazu, dass sich beispielsweise das Hohlrad oder der Ring des Leistungsverzweigungsgetriebes mit der gleichen Drehzahl wie das Sonnenrad und die zweite Welle und/oder der Träger dreht. Bei geöffnetem, drittem Schaltelement kann eine Drehzahl und/oder eine Kraft und/oder ein Drehmoment vom ersten Zusatzantriebselement an das Leistungsverzweigungsgetriebe übertragbar sein. Mit geschlossenem, drittem Schaltelement können ein dritter Stirnradsatz, insbesondere ein fünftes Festrad, und/oder das Leistungsverzweigungsgetriebe, insbesondere das Sonnenrad, mit dem oder über das dritte Schaltelement mit der zweiten Welle verbunden sein, insbesondere drehfest miteinander verbunden sein. Wenn das dritte Schaltelement geschlossen ist, beträgt die relative Drehzahl des Sonnenrads und der zweiten Welle 0 U/min. In diesem Fall kann eine Drehzahl und/oder eine Kraft und/oder ein Drehmoment nur mechanisch übertragen werden. Es bietet auch die Möglichkeit, das erste Zusatzantriebselement zu verwenden, um eine Kraft und/oder ein Drehmoment aus dem leistungsverzweigten Achsantrieb, zu übertragen.

Auf oder an der zweiten Welle kann ein zweites Schaltelement und/oder eine zweite Bremse angeordnet sein. Das zweite Schaltelement und/oder die zweite Bremse können zwischen dem Leistungsverzweigungsgetriebe und der ersten Fahrzeugachse, insbesondere dem Leistungsverzweigungsgetriebe und dem ersten Differential angeordnet sein. Das zweite Schaltelement kann dabei zwischen der zweiten Bremse und der ersten Fahrzeugachse, insbesondere der zweiten Bremse und dem ersten Differential angeordnet sein. Das Leistungsverzweigungsgetriebe kann über das zweite oder mit dem zweiten Schaltelement mit der ersten Fahrzeugachse, insbesondere dem ersten Differential, verbindbar, bevorzugt lösbar verbindbar, besonders bevorzugt lösbar drehfest und/oder lösbar antreibbar verbindbar sein. Das zweite Schaltelement kann bevorzugt eine zweite Kupplung sein. Das zweite Schaltelement kann betätigbar, bevorzugt selektiv betätigbar, besonders bevorzugt schliessbar und öffenbar sein. Mit betätigtem, insbesondere geschlossenem, zweitem Schaltelement kann also eine Drehzahl und/oder eine Kraft und/oder ein Drehmoment vom Leistungsverzweigungsgetriebe an die erste Fahrzeugachse, insbesondere über das erste Differential, und/oder umgekehrt übertragbar sein. Mit nicht betätigtem, insbesondere geöffnetem, zweitem Schaltelement, kann also keine Drehzahl und/oder keine Kraft und/oder kein Drehmoment vom Leistungsverzweigungsgetriebe an die erste Fahrzeugachse, insbesondere über das erste Differential, und/oder umgekehrt übertragbar sein. Die zweite Bremse kann insbesondere zwischen dem zweiten Schaltelement und dem Leistungsverzweigungsgetriebe angeordnet sein. Die zweite Bremse kann auf der zweiten Welle angeordnet sein, bevorzugt mit der zweiten Welle verbunden sein, besonders bevorzugt mit der zweiten Welle drehfest verbunden sein. Die zweite Welle kann mit der zweiten Bremse gegen Drehung haltbar sein, bevorzugt lösbar gegen Drehung haltbar sein. Die zweite Welle kann mit der zweiten Bremse lösbar, beispielsweise mit einem Getriebegehäuse oder einem Rahmen, verbindbar sein, bevorzugt lösbar gegen Drehung haltbar sein. Dies ist beispielsweise dann von Vorteil, wenn ein Fahrzustand gewünscht ist, bei dem eine Drehzahl und/oder eine Kraft und/oder ein Drehmoment vom ersten Zusatzantriebselement oder der ersten Fahrzeugachse, insbesondere nur, an die zweite Fahrzeugachse oder keine Drehzahl und/oder keine Kraft und/oder kein Drehmoment an die erste und zweite Fahrzeugachse übertragen werden soll. Mit der zweiten Bremse und/oder dem zweiten Schaltelement können mit dem leistungsverzweigten Achsantrieb weitere Betriebsmodi realisiert werden. Beispielsweise kann ein "Voll-Elektrisch" Betriebsmodus realisierbar sein. Dabei wird das erste Schaltelement geschlossen und das zweite Schaltelement geöffnet und die zweite Bremse geschlossen. Dadurch kann ein Leistungsfluss vom ersten Zusatzantriebselement an die zweite Fahrzeugachse realisiert werden, also insbesondere eine Drehzahl und/oder eine Kraft und/oder ein Drehmoment vom ersten Zusatzantriebselement an die zweite Fahrzeugachse übertragen werden. Vorteilhafterweise kann somit ein rein elektrischer Betrieb des leistungsverzweigten Achsantriebs, insbesondere auch des Fahrzeugs, erreicht werden. Weiter ist von Vorteil, dass mit dem "Voll-Elektrisch" Betriebsmodus beispielsweise das ein elektrisch betriebener Kriechgang und/oder das Rangieren des landwirtschaftlichen Zugfahrzeugs, insbesondere auf einer Hofstätte, realisiert werden kann. Im Speziellen kann das landwirtschaftliche Zugfahrzeug im "Voll-Elektrisch" Betriebsmodus vorteilhafterweise fernbedient werden, beispielsweise, um das Zugfahrzeug an ein Arbeitsgerät zu koppeln.

Die erste und zweite Fahrzeugachse können lenkbar ausgeführt sein, bevorzugt nur die erste Fahrzeugachse. Im Speziellen kann die erste Fahrzeugachse eine Vorderachse und/oder die zweite Fahrzeugachse eine Hinterachse sein.

Das Hauptgetriebe zeichnet sich bevorzugt dadurch aus, dass eine Übersetzung der Drehzahl und/oder der Kraft und/oder des Drehmoments von einem Getriebeeingang zu einem Getriebeausgang stattfindet. Dabei kann der Getriebeeingang an einer Seite des Hauptgetriebes angeordnet, welche bevorzugt dem Hauptantriebselement zugewandt ist. Der Getriebeeingang kann beispielsweise mit der ersten Welle verbunden sein. Der Getriebeausgang kann an einer Seite des Hauptgetriebes angeordnet sein, welche bevorzugt der zweiten Fahrzeugachse zugewandt ist, insbesondere auch auf einer dem Getriebeeingang gegenüberliegenden Seite des Hauptgetriebes. Das Hauptgetriebe kann beispielsweise als Mehrstufengetriebe, bevorzugt als Stufenautomatgetriebe oder als Handschaltgetriebe oder auch als Doppelkupplungsgetriebe, ausgeführt sein. Ebenso kann das Hauptgetriebe als stufenloses Getriebe, insbesondere als CVT (engl. Continuously Variable Transmission) oder als eIVT (engl. Electrical Infinitely Variable Transmission) oder als hIVT (engl. Hydraulical Infinitely Variable Transmission), ausgeführt sein.

Die Steuereinheit kann konfiguriert sein den Vorlauf in Abhängigkeit von einem Lenkwinkel der ersten Fahrzeugachse oder der ersten und zweiten Fahrzeugachse anhand einer Nachschlagetabelle (engl. Look-up table) und/oder anhand eines den Vorlauf repräsentierenden Modells zu ermitteln, insbesondere zu berechnen oder zu bestimmen. Das Modell kann eine softwaremäßige Darstellung oder Simulation für den Vorlauf sein und eine relativ genaue Reproduktion des zu erwartenden Wertes des Vorlaufs sein. Die Steuereinheit kann konfiguriert sein, das Modell anhand sensorisch erfasster Betriebsbedingungen und sensorisch erfasster Reaktionen des Achsantriebs bzw. des landwirtschaftlichen Zugfahrzeugs anzupassen. Dadurch lassen sich Änderungen im Achsantrieb bzw. des Fahrzeugs, die beispielsweise durch Schlupf oder Alterung von Komponenten bedingt sind, in das Modell mit aufnehmen. Vorzugsweise werden beim Anpassen des Modells bestimmte Parameter im Modell angepasst. Es kann aber auch ein Lernvorgang im Sinne eines nur auf Beobachtung beruhenden, maschinenlernenden Systems erfolgen.

Die Steuereinheit kann konfiguriert sein die Solldrehzahl des ersten Zusatzantriebselements gemäss der folgenden Formel zu ermitteln, insbesondere zu berechnen:

$$N_Z = \left( \frac{N_{DDS}}{i_{AFWD}} * i_0 + \left( K * \frac{N_{DDS}}{i_{RA}} * \chi_{Vorlauf} * i_{FA} \right) * (1 - i_0) \right) * i_{Zusatz}$$

mit

$N_Z$ = Solldrehzahl des ersten Zusatzantriebselements
$N_{DDS}$ = Drehzahl am Ausgang des Hauptgetriebes
$i_{AFWD}$ = Übersetzung vom Ausgang Hauptgetriebe in das Leistungsverzweigungsgetriebe
$i_0$ = Standübersetzung des Leistungsverzweigungsgetriebes
$K$ = Korrekturfaktor
$\chi_{Vorlauf}$ = Vorlauffaktor
$i_{RA}$ = Übersetzung an oder zur zweiten Fahrzeugachse, insbesondere der Hinterachse
$i_{FA}$ = Übersetzung an oder zur ersten Fahrzeugachse, insbesondere der Vorderachse
$i_{Zusatz}$ = Übersetzung vom Ausgang der E-Maschine zum Leistungsverzweigungsgetriebe

Ausserdem kann ein Sicherheitsfaktor des Vorlaufs vorgesehen sein. Der Sicherheitsfaktor kann 0 bis 1%, bevorzugt 0 bis 0,8%, besonders bevorzugt 0 bis 0,5% oder 0,1 bis 0,5% des Vorlaufs betragen. Der Sicherheitsfaktor kann entweder additiv in den Vorlauffaktor mit einbezogen werden (siehe unten) oder, wie im Folgende gezeigt, mit dem Vorlauffaktor multipliziert werden. Wird der Sicherheitsfaktor multiplikativ angewendet, kann dieser in einem Bereich von 1 bis 1,01, bevorzugt 1 bis 1,008, besonders bevorzugt 1 bis 1,005 bzw. 1,001 bis 1,005 liegen, im Speziellen 1,005 betragen. Wird der Sicherheitsfaktor multiplikativ angewendet, ergibt sich die Formel für die Solldrehzahl wie folgt:

$$N_Z = \left( \frac{N_{DDS}}{i_{AFWD}} * i_0 + \left( K * \frac{N_{DDS}}{i_{RA}} * \chi_{Vorlauf} * \chi_{Sicherheit} * i_{FA} \right) * (1 - i_0) \right) * i_{Zusatz}$$

Mit

$\chi_{Sicherheit}$ = Sicherheitsfaktor des Vorlaufs

Vorteilhafterweise kann mit oder durch die Solldrehzahl der Vorlauf des Achsantriebs angepasst und so der Wendekreis reduziert werden. Darüber hinaus kann der Verschleiss der Reifen, insbesondere der Vorderräder/-reifen, reduziert werden. Auch die Fahrweise eines landwirtschaftlichen Zugfahrzeugs, insbesondere auch mit einem Arbeitsgerät verbessert werden, indem beispielsweise bei Bergfahrten der Vorlauf angepasst wird. Darüber hinaus wird der Boden bzw. Untergrund weniger beschädigt.

In Ausgestaltung der Erfindung umfasst die Steuer-Operation die folgenden Schritte, wobei insbesondere die Steuereinheit konfiguriert ist, die Solldrehzahl des ersten Zusatzantriebselements zu steuern und/oder zu regeln, insbesondere einzustellen und/oder zu verstellen, sodass bevorzugt ein Vorlauf der ersten Fahrzeugachse eingestellt und/oder verstellt wird. Die Steuereinheit kann also konfiguriert sein basierend auf der Solldrehzahl ein Stellsignal an das erste Zusatzantriebselement abzugeben. Dabei kann vom ersten Zusatzantriebselement die Solldrehzahl in das Leistungsverzweigungsgetriebe eingeleitet werden, wodurch der Vorlauf der ersten Fahrzeugachse, insbesondere eine Drehzahl, eingestellt und/oder verstellt wird. Die in das Leistungsverzweigungsgetriebe eingeleitete Solldrehzahl des ersten Zusatzantriebselements kann im Leistungsverzweigungsgetriebe einer durch das Hauptgetriebe eingeleitete Drehzahl und/oder ein Drehmoment des Hauptgetriebe bzw. des Hauptantriebselement überlagert werden. Dadurch können die oben genannten Vorteil realisiert werden.

In Ausgestaltung der Erfindung umfasst der leistungsverzweigte Achsantrieb einen ersten Sensor zur Erfassung der Drehzahl am Ausgang des Hauptgetriebes, insbesondere zur direkten oder indirekten Erfassung der Drehzahl, und/oder einen zweiten Sensor zur Erfassung des Lenkwinkels der ersten Fahrzeugachse oder der ersten und/zweiten Fahrzeugachse, insbesondere zur direkten oder indirekten Erfassung des Lenkwinkels. Die Steuereinheit kann mit dem ersten Sensor und/oder dem zweiten Sensor verbunden, insbesondere signalübertragend verbunden sein. Mit anderen Worten, der Achsantrieb kann einen ersten und/oder zweiten Sensor umfassen, wobei mit dem ersten Sensor ein erstes Sensorsignal in Abhängigkeit von der am Ausgang des Hauptgetriebes erfassten bzw. gemessenen Drehzahl erzeugbar ist, und/oder mit dem zweiten Sensor ein zweites Sensorsignal in Abhängigkeit vom an der ersten oder ersten und zweiten Fahrzeugachse erfassten bzw. gemessenen Lenkwinkels erzeugbar ist. Das erste und/oder zweite Sensorsignal können mit der Steuereinheit empfangbar und/oder auswertbar sein. Die Steuereinheit kann also konfiguriert sein, mit dem ersten und/oder zweiten Sensorsignal eine Drehzahl am Ausgang des Hauptgetriebes und/oder einen Lenkwinkel zu ermitteln.

In Ausgestaltung der Erfindung umfasst der Vorlauffaktor einen ersten und zweiten Vorlauffaktoranteil, wobei der erste Vorlauffaktoranteil in Abhängigkeit vom Lenkwinkel (im Folgende $\alpha$) ermittelbar ist und der zweite Vorlauffaktoranteil in Abhängigkeit von einem Lenkwinkelschwellwert (im folgende T) und in Abhängigkeit vom Lenkwinkel ($\alpha$) ermittelbar ist. Die Steuereinheit kann also konfiguriert sein, den ersten Vorlauffaktoranteil in Abhängigkeit vom Lenkwinkel ($\alpha$) zu ermitteln und den zweite Vorlauffaktoranteil in Abhängigkeit von einem Lenkwinkelschwellwert (T) und in Abhängigkeit vom Lenkwinkel ($\alpha$) zu ermitteln. Mit anderen Worten, die Steuereinheit ist derart betreibbar, dass der erste Vorlauffaktoranteil in Abhängigkeit vom Lenkwinkel und der zweiten Vorlauffaktoranteil in Abhängigkeit vom Lenkwinkelschwellwert und dem Lenkwinkel ermittelbar ist. Der Lenkwinkel des ersten Vorlauffaktoranteils kann in einem Bereich von 0 bis zu einem maximalen Lenkwinkel (im Folgende $\alpha_{Max}$) liegen. Der zweite Vorlauffaktoranteil kommt nur zur Anwendung, wenn $\alpha \geq T$ gilt. Der zweite Vorlauffaktoranteil soll also nur ermittelt werden, wenn der Lenkwinkel grösser oder gleich dem Lenkwinkelschwellwert T ist. Der zweite Vorlauffaktoranteil kann nur bei einem Lenkwinkel in einem Bereich von > 0 Grad, bevorzugt von $\geq$ 10 Grad oder $\geq$ 15 Grad, besonders bevorzugt von $\geq$ 20 Grad, im Speziellen von $\geq$ 25 Grad, bis zum maximalen Lenkwinkel ($\alpha_{Max}$) ermittelt werden. Der Lenkwinkelschwellwert kann $T >$ 0 Grad, bevorzugt $T =$ 10 Grad oder $T$ = 15 Grad, besonders bevorzugt von $T =$ 20 Grad, im Speziellen von $T =$ 25 Grad sein.

Der Vorlauffaktor kann somit wie folgt ermittelt werden:

$$\chi_{Vorlauf} = \begin{cases} 1 + \left( \dfrac{\chi_1 + \chi_2}{100} \right) \; wenn \; \alpha \geq T \\[2ex] 1 + \dfrac{\chi_1}{100} \; mit \; \chi_2 = 0 \; wenn \; \alpha < T \end{cases}$$

$\chi_1$ = Erster Vorlauffaktoranteil in Prozent bzw. Anteilen = Lenkwinkelbedingter Vorlauf

$\chi_2$ = Zweiter Vorlauffaktoranteil in Prozent bzw. Anteilen

$T$ = Lenkwinkelschwellwert

$\alpha$ = Lenkwinkel, insbesondere ermittelter oder erfasster bzw. gemessener Lenkwinkel an der ersten oder ersten und zweiten Fahrzeugachse.

Der erste Vorlauffaktor kann mit oder anhand einer Nachschlagetabelle (engl. Look-up table) ermittelbar sein. Die Nachschlagetabelle kann beispielsweise in einem Speicher der Steuereinheit abgelegt oder in einer Cloud mit der Steuereinheit abrufbar sein. Der zweite Vorlauffaktor kann mit oder anhand einer Nachschlagetabelle (engl. Look-up table) ermittelbar sein. Die Nachschlagetabelle kann beispielsweise in einem Speicher der Steuereinheit abgelegt oder in einer Cloud mit der Steuereinheit abrufbar sein. Der zweite Vorlauffaktor kann aber auch basierend auf einer quadratischen Funktion, beispielsweise wie folgt ermittelbar sein:

$$\chi_2 = \begin{cases} \left( (\alpha - T)^2 * \dfrac{\chi_{Max}}{(\alpha_{Max} - \alpha)^2} \right) wenn\ \alpha \geq T \\ 0\ wenn\ \alpha < T \end{cases}$$

$\chi_2$ = Zweiter Vorlauffaktoranteil
$T$ = Lenkwinkelschwellwert
$\alpha$ = Lenkwinkel, insbesondere erfasster bzw. gemessener Lenkwinkel an der ersten oder ersten und zweiten Fahrzeugachse.
$\chi_{Max}$ = Maximaler zweiter Vorlauffaktoranteil
$\alpha_{Max}$ = Maximaler Lenkwinkel

Der Vorlauffaktor kann, wenn ein Sicherheitsfaktor vorgesehen ist, wie folgt ermittelt werden:

$$\chi_{Vorlauf} = \begin{cases} 1 + \dfrac{(\chi_1 + \chi_2 + \chi_3)}{100}\ wenn\ \alpha \geq T \\ 1 + \dfrac{(\chi_1 + \chi_3)}{100}\ mit\ \chi_2 = 0\ wenn\ \alpha < T \end{cases}$$

Mit
$\chi_3$ = Sicherheitsfaktor
Aufgrund des zweiten Vorlauffaktoranteils kann somit ein zusätzlicher Vorlauf in Abhängigkeit vom Lenkwinkel und einem Lenkwinkelschwellwert ermittelt und angewendet werden. Vorteilhafterweise kann der zusätzliche Vorlauf das landwirtschaftliche Zugfahrzeug während einer Kurvenfahrt um die Kurve ziehen, wodurch der Wendekreis nochmals verkleinert wird. Darüber hinaus können die oben genannten Vorteil erreicht werden.
In Ausgestaltung der Erfindung ist der zweite Vorlauffaktoranteil in Abhängigkeit von zwei oder mehreren Lenkwinkelschwellwerten, insbesondere mit der Steuereinheit, ermittelbar. Im Speziellen kann die Steuereinheit konfiguriert sein den zweiten Vorlauffaktor in Abhängigkeit von zwei oder mehreren Lenkwinkelschwellwerten $T_1..T_n$ zu ermitteln. Als Schwellwerte können zwei, bevorzugt 3 oder 4, besonders bevorzugt 5 oder mehr Lenkwinkelschwellwerte vorgesehen sein. Jedem Schwellwert kann dabei ein anderer maximaler zweiter Vorlauffaktoranteil zugeordnet sein:

| $T_1$ | $\chi_{Max1}$ |
|---|---|
| .. | .. |
| $T_n$ | $\chi_{Maxn}$ |

wobei gelten kann $T_1 < .. < T_n$ in Grad und $\chi_{Max1} > .. > \chi_{Maxn}$ in Prozent oder Anteilen. Im Speziellen kann beispielsweise mit drei Lenkwinkelschwellwerten $T_1..T_3$ gelten:

| T | $\chi_{Max}$ |
|---|---|
| 29° | 25% |
| 30° | 20% |
| 31,5° | 16% |

Vorteilhafterweise kann aufgrund des zweiten Vorlauffaktoranteils ein zusätzlicher Vorlauf der ersten Fahrzeugachse in Abhängigkeit vom Lenkwinkel und einem Lenkwinkelschwellwert ermittelt und angewendet werden, der beispielsweise das Zugfahrzeug während einer Kurvenfahrt um die Kurve zieht und so den Wendekreis verkleinert. Ausserdem können aufgrund des Lenkwinkelschwellwertes und/oder des maximalen zweiten Vorlauffaktoranteil verschiedene Stufen der Anwendung des zusätzlichen Vorlaufs, beispielsweise ein "Aggressivität" des zusätzlichen Vorlaufs, definiert werden.

In Ausgestaltung der Erfindung umfasst der leistungsverzweigte Achsantrieb eine Vorgelegewelle. Das erste Zusatzantriebselement ist mit dem ersten oder über das erste Schaltelement mit der Vorgelegewelle verbindbar, bevorzugt antreibbar verbindbar, besonders bevorzugt lösbar antreibbarverbindbar. Ebenso kann das Leistungsverzweigungsgetriebe mit der Vorgelegewelle verbunden, insbesondere antreibbar verbunden sein. Über die Vorgelegewelle kann das Leistungsverzweigungsgetriebe also mit dem ersten Zusatzantriebselement verbunden, insbesondere antreibbar verbunden sein. Das erste Schaltelement kann vollständig oder teilweise auf der Vorgelegewelle angeordnet sein. Ebenso kann das erste Schaltelement, insbesondere teilweise und/oder zeitweise drehfest mit der Vorgelegewelle verbunden sein. Dabei kann eine Drehzahl und/oder eine Kraft und/oder ein Drehmoment des ersten Zusatzantriebselement mit dem ersten Schaltelement vom ersten Zusatzantriebselement an die Vorgelegewelle und von der Vorgelegewelle an das Leistungsverzweigungsgetriebe übertragbar sein. Gemäß einer bevorzugten Weiterbildung umfasst der leistungsverzweigte Achsantrieb einen zweiten und dritten Stirnradsatz. Das erste Schaltelement ist über den oder mit dem zweiten Stirnradsatz mit dem ersten Zusatzantriebselement verbindbar oder verbunden, bevorzugt lösbar verbindbar oder verbunden, besonders bevorzugt lösbar antreibbar verbindbar oder verbunden, und die Vorgelegewelle über den dritten Stirnradsatz mit dem Leistungsverzweigungsgetriebe verbunden ist, bevorzugt antreibbar verbunden und mechanisch gekoppelt. Mit dem zweiten Stirnradsatz kann eine Drehzahl und/oder eine Kraft und/oder ein Drehmoment des ersten Zusatzantriebelements vom ersten Zusatzantriebelement zum ersten Schaltelement und/oder umgekehrt übertragen oder eingeleitet werden und vom ersten Schaltelement weiter an oder in die Vorgelegewelle und/oder umgekehrt übertragen oder eingeleitet werden, insbesondere wenn das erste Schaltelement geschlossen ist. Die Vorgelegewelle wiederum kann mit dem ersten oder über das erste Schaltelement mit dem zweiten Stirnradsatz verbunden, bevorzugt antreibbar verbunden und mechanisch gekoppelt sein. Das Leistungsverzweigungsgetriebe kann über den oder mit dem dritten Stirnradsatz mit der Vorgelegewelle verbunden, insbesondere antreibbar verbunden und mechanisch gekoppelt sein. Mit dem dritten Stirnradsatz kann eine Drehzahl und/oder eine Kraft und/oder ein Drehmoment der Vorgelegewelle an oder in das Leistungsverzweigungsgetriebe und/oder umgekehrt übertragen oder eingeleitet werden. Dadurch kann eine Drehzahl und/oder eine Kraft und/oder ein Drehmoment vom ersten Zusatzantriebselement über den zweiten Stirnradsatz an das geschlossene erste Schaltelement weiter an die Vorgelegewelle und von der Vorgelegewelle über den dritten Stirnradsatz an das Leistungsverzweigungsgetriebe und vom Leistungsverzweigungsgetriebe, insbesondere über das erste Differential, auf die erste Fahrzeugachse übertragbar sein. Der zweite Stirnradsatz kann ein zweites Zahnradpaar, insbesondere ein erstes Schaltrad und ein drittes Festrad umfassen. Das dritte Festrad kann mit dem ersten Zusatzantriebselement, insbesondere einer Abtriebswelle des ersten Zusatzantriebselements, verbunden sein. Das erste Schaltrad kann drehbar auf der Vorgelegewelle gelagert sein, insbesondere frei drehbar und/oder axial verschiebbar auf der Vorgelegewelle gelagert sein. Ebenso kann das erste Schaltrad mit einer Seite des ersten Schaltelements verbunden, bevorzugt drehfest und/oder antreibbar verbunden sein. Der dritte Stirnradsatz kann ein drittes Zahnradpaar, insbesondere ein viertes und ein fünftes Festrad umfassen. Das vierte Festrad kann mit der Vorgelegewelle V und das fünfte Festrad mit dem Leistungsverzweigungsgetriebe, insbesondere einem Sonnenrad des Leistungsverzweigungsgetriebe verbunden sein, bevorzugt drehfest und/oder antreibbar verbunden sein. Mit dem vierten und fünften Festrad kann also eine Drehzahl und/oder eine Kraft und/oder ein Drehmoment von der Vorgelegewelle an das Leistungsverzweigungsgetriebe und/oder umgekehrt übertragbar sein. Dadurch kann also eine Übertragung der Drehzahl und/oder des Drehmoments vom ersten Zusatzantrieb an das Leistungsverzweigungsgetriebe realisiert und verbessert werden. Ebenso kann so vorteilhafterweise ein Vorlauf der ersten Fahrzeugachse effizienter einstellbar und/oder verstellbar, insbesondere effizienter steuerbar und/oder regelbar sein. Dadurch können die oben genannten Vorteile des leistungsverzweigten Getriebes realisiert werden. Darüber hinaus kann dadurch eine effiziente Übertragung der Drehzahl und/oder des Drehmoments vom ersten Zusatzantrieb an das Leistungsverzweigungsgetriebe realisiert werden.

In Ausgestaltung der Erfindung ist das Leistungsverzweigungsgetriebe als Planetengetriebe ausgebildet. Ein Hohlrad des Leistungsverzweigungsgetriebes kann über den oder mit dem ersten Stirnradsatz mit der dritten Welle verbunden sein. Im Speziellen kann das Hohlrad mit dem zweiten Festrad verbunden sein, bevorzugt drehfest und/oder antreibbar verbunden sein. Dadurch kann eine Kraft und/oder eine Drehzahl und/oder ein Drehmoment vom Hauptantriebselement über das Hauptgetriebe an die dritte Welle und weiter über den ersten Stirnradsatz an das Hohlrad des Planetengetriebe übertragbar sein. Die erste Fahrzeugachse kann über die zweite oder mit der zweiten Welle mit einem Planetenträger beziehungsweise einem Steg des Leistungsverzweigungsgetriebes verbunden, insbesondere antreibbar verbunden sein. Im Speziellen kann der Planetenträger mit der zweiten Welle verbunden sein, bevorzugt drehfest und/oder antreibbar verbunden sein. Dadurch kann eine Kraft und/oder eine Drehzahl und/oder ein Drehmoment vom Planetenträger des Leistungsverzweigungsgetriebes auf die zweite Welle und weiter, insbesondere über das erste Differential, an oder in die erste Fahrzeugachse übertragbar oder einleitbar sein. Ebenso kann auch umgekehrt eine Kraft und/oder eine Drehzahl und/oder ein Drehmoment in das Leistungsverzweigungsgetriebe übertragbar oder einleitbar sein. An dem Planetenträger kann ein Planetensatz, insbesondere eines oder mehrere Planetenräder, drehbar gelagert, die jeweils mit Sonnenrad und Hohlrad kämmen, sich also insbesondere in ständigem Kämmeingriff mit diesen befinden. Der Planetensatz kann insbesondere einen Satz von Planetenrädern aufweisen. Der Planetensatz kann drei Planetenräder umfassen. Darüber hinaus kann das Sonnenrad des Leistungsverzweigungsgetriebes über das fünfte Festrad und das vierte Festrad, und insbesondere weiter über die Vorgelegewelle und das erste Schaltelement und den zweiten Stirnradsatz, mit dem ersten Zusatzantriebselement verbunden, insbesondere antreibbar verbunden sein. Dadurch können die oben genannten Vorteile des leistungsverzweigten Achsantriebs realisiert werden.

In Ausgestaltung der Erfindung umfasst die erste Fahrzeugachse zwei oder mehrere erste Reifen oder Räder und die zweite Fahrzeugachse zwei oder mehrere zweite Reifen oder Räder umfasst. In Ausgestaltung der Erfindung kann die Steuereinheit konfiguriert sein den Radius des ersten Reifens bzw. die Radien der ersten Reifen in Abhängigkeit von einem zurückgelegten Weg des oder der ersten Reifen und einer Drehzahl der ersten Fahrzeugachse zu ermitteln und/oder zu kalibrieren, und den Radius des zweiten Reifens bzw. der zweiten Reifen in Abhängigkeit von einem zurückgelegten Weg des oder der zweiten Reifen und einer Drehzahl der zweiten Fahrzeugachse zu ermitteln und/oder zu kalibrieren. Dieser Schritt kann vor der Ermittlung der Solldrehzahl des ersten Zusatzantriebselements erfolgen. Bei zwei oder mehrere Reifen kann die Steuereinheit konfiguriert sein einen Mittelwert des Radius der ersten Reifen und einen Mittelwert des Radius der zweiten Reifen zu ermitteln bzw. zu berechnen.

Der Radius des oder der ersten Reifen kann ein konstanter Wert und der Radius des oder der zweiten Reifen kann ebenfalls ein konstanter Wert sein, wobei die Steuereinheit konfiguriert sein kann den Korrekturfaktor mit den konstanten Werten der Radien zu ermitteln bzw. zu berechnen. Ebenso kann die Steuereinheit konfiguriert sein den Radius der ersten Reifens zu ermitteln und/oder zu kalibrieren, und/oder den Radius der zweiten Reifen zu ermitteln und/oder zu kalibrieren und den Korrekturfaktor mit dem Radius des ersten und dem Radius des zweiten Reifens zu ermitteln.

Der Korrekturfaktor kann also ein konstanter Wert für den Achsantrieb oder das landwirtschaftliche Zugfahrzeug sein, insbesondere vorgebbar sein. Ebenso kann der Korrekturfaktor mittels des Verhältnis, insbesondere der Mittelwerte, des Radius des zweiten Reifens zum Radius des ersten Reifens ermittelbar sein:

$$K = \frac{R_{RA}}{R_{FA}}$$

Mit

$K$ = Korrekturfaktor
$R_{RA}$ = Radius des Reifens an der zweiten Fahrzeugachse, insbesondere der Hinterachse, bzw. des zweiten Reifens.
$R_{FA}$ = Radius des Reifens an der ersten Fahrzeugachse, insbesondere der Vorderachse, bzw. des ersten Reifens.

Der Korrekturfaktor kann aber auch mit oder aus dem Drehzahlverhältnis der Drehzahl der ersten zur zweiten Fahrzeugachse ermittelbar sein.

$$K = \frac{N_{FA}}{N_{RA}}$$

Mit

$K$ = Korrekturfaktor
$N_{RA}$ = Drehzahl der zweiten Fahrzeugachse, insbesondere der Hinterachse.
$R_{FA}$ = Drehzahl ersten Fahrzeugachse, insbesondere der Vorderachse.

Die Drehzahlen können beispielsweise während einer Kalibrierfahrt gemessen werden. Vorteilhafterweise kann so die Solldrehzahl und somit der Vorlauf genauer und/oder bedarfsgerechter bestimmt werden.

In Ausgestaltung der Erfindung ist die Steuereinheit konfiguriert, ein Vorderachsdrehmoment zu ermitteln, und das Vorderachsdrehmoments mit einem Drehmomentlimit zu vergleichen, und die Solldrehzahl des ersten Zusatzantriebselements in Abhängigkeit vom Drehmomentlimit zu steuern und/oder zu regeln, insbesondere einzustellen und/oder zu verstellen. Für das Vorderachsdrehmoment $M_{FA}$ gilt entweder, dass ein festgelegtes maximales Drehmoment $M_{Max}$ oder ein sich aus Zugkraft $F_{FA,Zug} = \tau_{FA} * F_{FA,Achslast}$ mit $\tau_{FA}$ =Traktionskoeffizient und $F_{FA,Achslast}$ = Achslast ergebendes maximale Vorderachsdrehmoment

$$M_{Limit} \sim F_{FA,Zug}$$

nicht überschritten werden darf, wobei der kleinere der beiden Werte das Limit darstellt. Dazu kann die maximal übertragbare Zugkraftv $F_{FA,Zug}$ = *maximal*, die mit dieser Achsbelastung möglich ist, bestimmt werden. Diese maximale mögliche Zugkraft stellt dann das Vorderachsdrehmoment Limit dar. Dadurch kann vorteilhafterweise vermieden werden, dass der Achsantrieb, insbesondere die erste Fahrzeugachse, durch zu grosse Drehmomente zerstört wird.

Die Erfindung betrifft weiter ein landwirtschaftliches Zugfahrzeug, beispielsweise einen Traktor oder Schlepper, umfassend einen leistungsverzweigten Achsantrieb, insbesondere einen leistungsverzweigten Achsantrieb nach mindestens einem der Ansprüche 1 bis 11. Das erfindungsgemässe landwirtschaftliche Zugfahrzeug weist die oben beschriebenen Vorteile des erfindungsgemässen leistungsverzweigten Achsantriebs auf. Darüber hinaus zeichnet sich das erfindungsgemässe landwirtschaftliche Zugfahrzeug durch eine verbesserte Manövrierbarkeit aufgrund kleinerer Wenderadien aus, was insbesondere bei Feldfahrten im Vorgewende vorteilhaft ist. Die Lenkunterstützung trägt auch zu einer Komforterhöhung bei.

In Ausgestaltung der Erfindung ist der leistungsverzweigte Achsantrieb zum Antreiben des Fahrzeugs, insbesondere wahlweisen Antreiben, der ersten und/oder zweiten Fahrzeugachse ausgebildet. Im Speziellen ist mit einer Drehzahl und/oder Kraft und/oder einem Drehmoment des Hauptantriebselements wenigstens die zweite Fahrzeugachse über das Hauptgetriebe antreibbar. Die erste Fahrzeugachse kann dabei eine lenkbare Vorderachse und/oder die zweite Fahrzeugachse eine Hinterachse sein. In Ausgestaltung der Erfindung ist die Steuereinheit zur Bestimmung des Vorlaufs, bevorzugt des ersten und zweiten Vorlauffaktoranteils, und/oder zur Steuerung und/oder Regelung, insbesondere zum Einstellen und/oder Verstellen, des Vorlauf konfiguriert. Ebenso kann die Steuereinheit aber auch zur Steuerung und/oder Regelung, insbesondere zum Einstellen und/oder Verstellen, von unterschiedlichen Betriebsmodi des landwirtschaftlichen Zugfahrzeug, insbesondere des leistungsverzweigten Achsantriebs eingerichtet. Denkbar ist dabei, dass fahrsituationsabhängig ein Vorlauf und/oder ein Lenkwinkelschwellwert und/oder ein Betriebsmodus von einer Bedienperson des landwirtschaftlichen Zugfahrzeugs auswählbar ist und/oder der Steuereinheit vorgegeben wird. Dazu kann das Zugfahrzeug eine Ein- und Ausgabeeinheit umfassen, welche mit der Steuereinheit signalverbunden sein kann. Zusätzlich oder alternativ kann die Steuereinheit konfiguriert sein in Abhängigkeit von Sensoren und/oder Aktuatoren und/oder Bauteile des leistungsverzweigten Achsantriebs ein Betriebsmodus bestimmt werden.

Die Erfindung betrifft weiter ein Verfahren zum Betreiben eines leistungsverzweigten Achsantriebs, insbesondere eines leistungsverzweigten Achsantriebs nach einem der Ansprüche 1 bis 11 und/oder eines landwirtschaftlichen Fahrzeugs nach einem der Ansprüche 12 oder 13. Der leistungsverzweigte Achsantrieb kann ein erstes Zusatzantriebselement, eine erste Fahrzeugachse, eine zweite Fahrzeugachse und ein Hauptantriebselement zur Bereitstellung eines Drehmoments und/oder einer Drehzahl umfassen, welches mit einer ersten Welle auf ein Hauptgetriebe übertragen wird. Das Hauptgetriebe ist mit der zweiten Fahrzeugachse verbunden. Mit dem Drehmoment und/oder der Drehzahl des Hauptantriebselements kann wenigstens die zweite Fahrzeugachse über das Hauptgetriebe angetrieben sein. Der leistungsverzweigte Achsantrieb umfasst weiter ein Leistungsverzweigungsgetriebe. Das Leistungsverzweigungsgetriebe kann über einen ersten Stirnradsatz mit der zweiten Fahrzeugachse und dem Hauptgetriebe verbunden sein. Das Leistungsverzweigungsgetriebe ist über eine zweite Welle mit der ersten Fahrzeugachse verbunden. Das erste Zusatzantriebselement wird zur Einleitung einer Drehzahl und/oder eines Drehmoments, insbesondere über ein erstes Schaltelement, mit dem Leistungsverzweigungsgetriebe verbunden. Das Verfahren umfasst die folgenden Schritte, insbesondere wenn das erste Zusatzantriebselement mit dem Leistungsverzweigungsgetriebe verbunden ist:

i. Ermitteln einer Drehzahl am Ausgang des Hauptgetriebe,
ii. Ermittelns eines Vorlauffaktors in Abhängigkeit von einem Lenkwinkel der ersten Fahrzeugachse (26) oder der ersten und zweiten Fahrzeugachse (26, 28),
iii. Ermitteln einer Solldrehzahl des ersten Zusatzantriebselements in Abhängigkeit von der Drehzahl des Hauptgetriebes und einem Korrekturfaktor und dem Vorlauffaktor,
iv. Durchführen einer Steuer-Operation am leistungsverzweigten Achsantrieb, insbesondere dem ersten Zusatzantriebselement, in Abhängigkeit von der Solldrehzahl.

Mit anderen Worten, das Verfahren umfasst einen Schritt des Einwirkens des ersten Zusatzantriebselements auf das Leistungsverzweigungsgetriebe, wobei von dem ersten Zusatzantriebselement eine Drehzahl und/oder eine Kraft und/oder ein Drehmoment in das Leistungsverzweigungsgetriebe eingeleitet wird und dadurch der Vorlauf, insbesondere die Drehzahl, der ersten Fahrzeugachse steuerbar und/oder regelbar, insbesondere einstellbar und/oder verstellbar ist. Die Schritte des Verfahrens können in der angegebenen Reihenfolge durchgeführt, und/oder aber zumindest teilweise zeitlich überlagert und/oder separat erfolgen und/oder wiederholt werden, insbesondere die Schritte i. bis iii. können gleichzeitig oder teilweise zeitlich überlagert erfolgen. Der Schritt iv. des Verfahrens erfolgt immer nach den Schritten i. bis iii.. Bevorzugt können alle Schritte des Verfahrens während der Fahrt der Arbeitsfahrzeug-Arbeitsgerät-Kombination durchgeführt werden. Im Speziellen wird das Verfahren vom Fahrer und/oder automatisch mit vorgebbarer Fahrsituation angestoßen und dann intermittierend und/oder kontinuierlich durchgeführt. Ebenso kann das Verfahren vom Fahrer und/oder automatisch bei einer vorgebbaren Fahrsituation beendet werden. Das erfindungsgemässe Verfahren weist die oben beschriebenen Vorteile des erfindungsgemässen leistungsverzweigten Achsantriebs auf. Das Verfahren kann also einen Schritt des Regelns eines Vorlaufs der ersten Fahrzeugachse in Abhängigkeit vom Lenkwinkels einer der Fahrzeugachsen, insbesondere der ersten Fahrzeugachse oder der ersten und zweiten Fahrzeugachse zueinander. Dabei kann der Vorlauf bedarfsgerecht, wie eingangs beschrieben, angepasst, also insbesondere erhöht oder verringert werden.

Der erfindungsgemässe leistungsverzweigte Achsantrieb und/oder das erfindungsgemässe landwirtschaftliche Zugfahrzeug können ausserdem die Steuereinheit umfassen. Ebenso kann das erfindungsgemässe Verfahren mit der Steuereinheit ausführbar sein. Die Steuereinheit kann ein elektronisches Modul und/oder ein eingebettetes System sein und/oder ein Speichermodul und/oder einen Prozessor umfassen. Die Steuereinheit kann mit dem ersten und/oder zweiten Zusatzantriebselement und/oder dem Nebenabtrieb und/oder dem Speicherelement und/oder dem ersten und/oder zweiten und/oder dritten Schaltelement und/oder dem Hauptantriebselement und/oder dem Hauptgetriebe und/oder dem Leistungsverzweigungsgetriebe und/oder der ersten und/oder zweiten Bremse verbunden sein, bevorzugt signalverbunden und/oder signalübertragend und/oder datenleitend verbunden sein. Unter einer signalverbundenen und/oder signalübertragenden und/oder datenleitenden Verbindung ist dabei zu verstehen, dass ein Austausch von Signalen zwischen den verbundenen Bauteilen stattfindet. Die Signale werden in der Steuereinheit verarbeitet und dienen somit zur Steuerung und/oder Regelung und Ansteuerung der signalverbundenen und/oder signalübertragend und/oder datenleitend miteinander verbundenen Bauteile. Die Verbindung kann kabelgebunden, insbesondere also mit Kabel, und/oder kabellos, also per Funk, beispielsweise mit Bluetooth realisiert sein. Der Kommunikationsbus kann beispielsweise Isobus, CAN-Bus oder ähnliches sein kann. Ausserdem kann mit der Steuereinheit eine weitere Steuereinheit steuerbar und/oder regelbar sein. Die weitere Steuereinheit (engl. ECU = electronic control unit oder ECM = electronic control module) kann wie die Steuereinheit ausgebildet sein. Die Steuereinheit kann dem Zugfahrzeug zugeordnet, insbesondere am Zugfahrzeug angeordnet sein oder dem leistungsverzweigten Achsantrieb zugeordnet sein oder der leistungsverzweigte Achsantrieb kann die Steuereinheit umfassen. Die Steuereinheit kann auch zweiteilig beispielsweise als Teil des Fahrzeugs und als Teil des leistungsverzweigten Achsantriebs ausgebildet sein. Ausserdem können das Hauptantriebselement zur Bereitstellung eines Drehmoments und/oder das Hauptgetriebe und/oder das Leistungsverzweigungsgetriebe und/oder das erste und/oder zweite Zusatzantriebselement und/oder der Nebenabtrieb und/oder das Speicherelement und/oder das erste und/oder zweite und/oder dritte Schaltelement und/oder die erste und/oder zweite Bremse mit der Steuereinheit steuerbar und/oder regelbar, bevorzugt einstellbar und/oder verstellbar sein. Die Steuereinheit kann unmittelbar mit der in einer Kabine des Fahrzeugs angeordneten Ein- und Ausgabeeinheit Verbindung stehen, durch welche von einer Bedienperson eingegebene Daten an die Steuereinheit übertragen oder von dieser empfangen und ausgegeben werden können. Denkbar ist aber auch, dass die Steuereinheit mittelbar durch eine übergeordnete Steuereinheit mit der Ein- und Ausgabeeinheit verbunden ist. Der leistungsverzweigte Achsantrieb kann einen ersten Aktuator und/oder einen zweiten Aktuator und/oder einen dritten Aktuator und/oder einen vierten Aktuator und/oder einen fünften Aktuator umfassen. Dem ersten Schaltelement kann der erste Aktuator und/oder dem zweiten Schaltelement kann der zweite Aktuator und/oder dem dritten Schaltelement kann der dritte Aktuator und/oder der ersten Bremse der vierte Aktuator und/oder der zweiten Bremse der fünfte Aktuator zugeordnet sein. Der erste und/oder zweite und/oder dritte und/oder vierte und/oder fünfte und/oder sechste Aktuator können mit der Steuereinheit verbunden sein, bevorzugt signalverbunden und/oder signalübertragend und/oder datenleitend verbunden sein. Der erste und/oder zweite und/oder dritte und/oder vierte und/oder fünfte und/oder sechste Aktuator können mit der Steuereinheit einstellbar und/oder verstellbar, insbesondere betätigbar oder schliessbar sein.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:

Fig. 1    eine schematische Darstellung eines ersten Ausführungsbeispiels eines erfindungsgemässen landwirtschaftlichen Fahrzeugs mit einem ersten Ausführungsbeispiel eines erfindungsgemässen leistungsverzweigten Achsantriebs, und

Fig. 2    eine schematische Darstellung des ersten Ausführungsbeispiels des erfindungsgemässen leistungsverzweigten Achsantriebs, und

Fig. 3    eine schematische Darstellung eines zweiten Ausführungsbeispiels des erfindungsgemässen leistungsverzweigten Achsantriebs, und

Fig. 4    eine schematische Darstellung eines dritten Ausführungsbeispiels des erfindungsgemässen leistungsverzweigten Achsantriebs, und

Fig. 5    eine schematische Darstellung eines vierten Ausführungsbeispiels des erfindungsgemässen leistungsverzweigten Achsantriebs, und

Fig. 6    eine schematische Darstellung eines fünften Ausführungsbeispiels des erfindungsgemässen leistungsverzweigten Achsantriebs, und

Fig. 7    eine schematische Darstellung eines sechsten Ausführungsbeispiels des erfindungsgemässen leistungsverzweigten Achsantriebs, und

Fig. 8    eine schematische Darstellung eines siebten Ausführungsbeispiels des erfindungsgemässen leistungsverzweigten Achsantriebs, und

Fig. 9    eine schematische Darstellung eines achten Ausführungsbeispiels des erfindungsgemässen leistungsverzweigten Achsantriebs, und

Fig. 10    eine detaillierte schematische Darstellung eines neunten Ausführungsbeispiels des erfindungsgemässen leistungsverzweigten Achsantriebs, und

Fig. 11    eine schematische Darstellung des Verlaufs des Vorlauffaktors des erfindungsgemässen leistungsverzweigten Achsantriebs, und

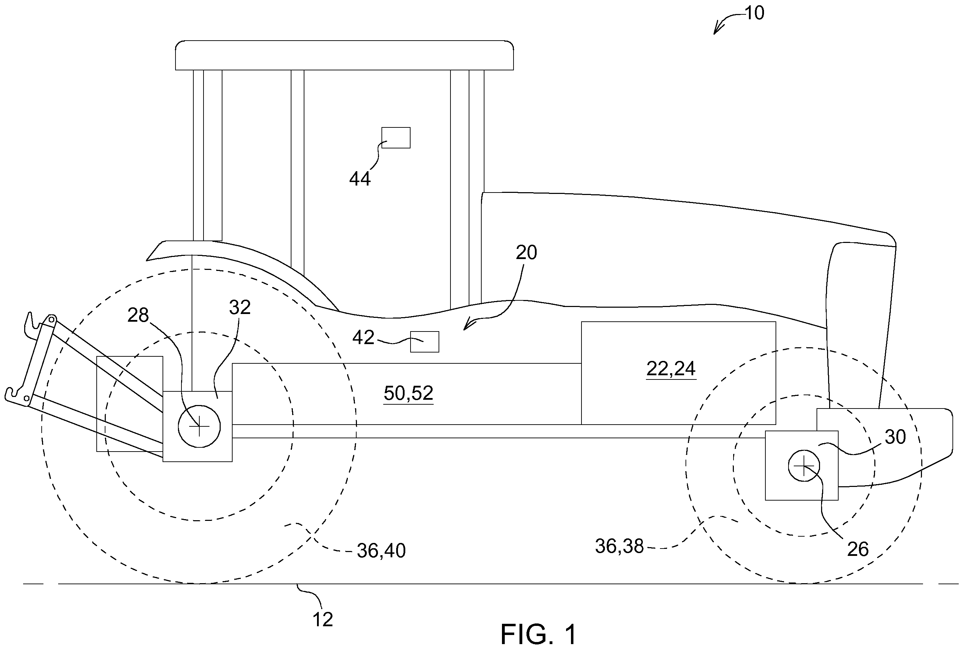

Figur 1 zeigt eine schematische Darstellung eines ersten Ausführungsbeispiels eines erfindungsgemässen landwirtschaftlichen Zugfahrzeugs 10, hier insbesondere eines Traktors oder Schleppers, mit einem ersten Ausführungsbeispiel eines erfindungsgemässen leistungsverzweigten Achsantrieb 20. Das landwirtschaftliche Zugfahrzeug 10 umfasst den leistungsverzweigten Achsantrieb 20. Der leistungsverzweigte Achsantrieb 20 umfasst ein Hauptantriebselement 22, ein Hauptgetriebe 24, eine erste Fahrzeugachse 26 und eine zweite Fahrzeugachse 28. Das Hauptantriebselement 22 kann als Verbrennungskraftmaschine oder Elektromotor ausgeführt sein kann, insbesondere als ein Verbrennungsmotor ausgeführt sein. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Der leistungsverzweigte Achsantrieb 20 kann ausserdem ein erstes Differential 30, also insbesondere ein Vorderachsdifferential, umfassen. Die erste Fahrzeugachse 26 kann mit dem ersten Differential 30 verbunden sein, insbesondere antreibbar verbunden sein. Der leistungsverzweigte Achsantrieb 20 kann ausserdem ein zweites Differential 32, also insbesondere ein Hinterachsdifferential, umfassen. Die zweite Fahrzeugachse 28 kann mit dem zweiten Differential 32 verbunden sein, insbesondere antreibbar verbunden sein.

Mit dem Hauptgetriebe 24 kann eine Drehbewegung und/oder Kraft und/oder ein Drehmoment des Hauptantriebselements 22 mit unterschiedlichen Gangstufen auf die erste und/oder zweite Fahrzeugachse 26, 28 übertragbar sein. Die erste und/oder zweite Fahrzeugachse 26, 28 wandeln eine Drehbewegung und/oder Kraft und/oder ein Drehmoment des Hauptantriebselements 22 in eine Drehbewegung und/oder Kraft und/oder ein Drehmoment eines oder mehrerer Bodeneingriffsmittel 36, beispielsweise Räder oder Reifen, und somit in einen Vorschub des Zugfahrzeugs 10 um. Das Zugfahrzeug 10, insbesondere der Achsantrieb 20, kann eines oder mehrere Bodeneingriffsmittel 36 umfassen, hier in Form von Reifen oder Rädern 38, 40 dargestellt, aufweisen, welche mit einem Untergrund 12 bzw. Boden zur Übertragung von Antriebskräften in Eingriff stehen und/oder durch die sich das Zugfahrzeug 10 auf dem Untergrund 12 abstützt.

Das Zugfahrzeug 10 kann ausserdem ein Fahrgestell (nicht dargestellt) aufweisen, wobei das Fahrgestell insbesondere von den an der ersten und/oder zweiten Fahrzeugachse 28, 30 aufgehängten Reifen 38, 40 getragen werden kann. Im Speziellen sind ein Paar erste Räder 38 an der ersten Fahrzeugachse 26 und ein Paar zweite Räder 40 an der zweiten Fahrzeugachse 28 angeordnet, insbesondere mit diesen drehbar verbunden. Dabei können die Radien der Rädern 38, 40 voneinander abweichen, insbesondere kann der Radius der zwei ersten Räder 38 kleiner als der Radius der zwei zweiten Räder 40 sein. Alternativ könnten die Bodeneingriffsmittel 36 auch als Raupen ausgebildet und angeordnet sein.

Der leistungsverzweigte Achsantrieb 20 und/oder das Zugfahrzeug 10 können ausserdem eine Steuereinheit 42 umfassen. Die Steuereinheit 42 kann unmittelbar mit einer in einer Kabine des Zugfahrzeugs angeordneten Ein- und Ausgabeeinheit 44 Verbindung stehen, durch welche von einer Bedienperson eingegebene Daten an die Steuereinheit 42 übertragen oder von dieser empfangen und ausgegeben werden können.

Die Steuereinheit 42 des leistungsverzweigten Achsantriebs 20 ist konfiguriert:

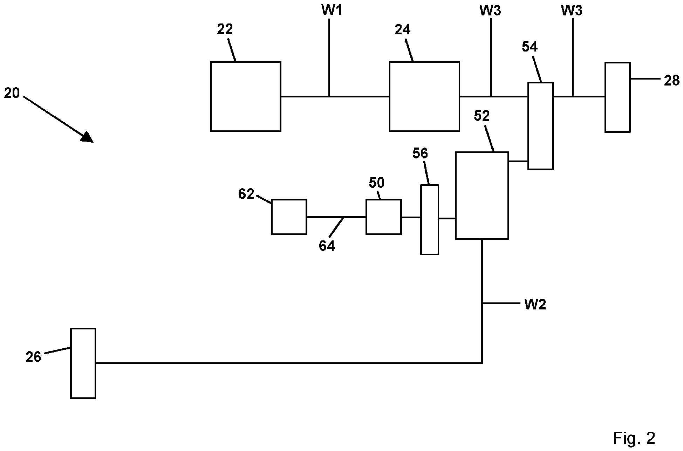

- eine Drehzahl am Ausgang des Hauptgetriebes 24 zu ermitteln
- einen Vorlauffaktor in Abhängigkeit von einem Lenkwinkel der ersten Fahrzeugachse 26 oder einem Lenkwinkel der ersten und zweiten Fahrzeugachse 26, 28 zu ermitteln,
- eine Solldrehzahl eines ersten Zusatzantriebselements 50 (siehe Figuren 2 bis 10) in Abhängigkeit von der Drehzahl am Ausgang des Hauptgetriebes 24 und einem Korrekturfaktor und dem Vorlauffaktor zu ermitteln, und
- Eine Steuer-Operation am leistungsverzweigten Achsantrieb 20, insbesondere dem ersten Zusatzantriebselement 50, in Abhängigkeit von der Solldrehzahl durchzuführen.

Die Steuer-Operation umfasst den folgenden Schritt, wobei insbesondere die Steuereinheit 42 konfiguriert ist, die Solldrehzahl des ersten Zusatzantriebselements 50 zu steuern und/oder zu regeln, insbesondere einzustellen und/oder zu verstellen, sodass bevorzugt ein Vorlauf der ersten Fahrzeugachse 26 eingestellt und/oder verstellt wird. Die in das Leistungsverzweigungsgetriebe 52 eingeleitete Solldrehzahl des ersten Zusatzantriebselements 50 kann im Leistungsverzweigungsgetriebe 52 einer durch das Hauptgetriebe 24 eingeleitete Drehzahl und/oder einem Drehmoment des Hauptgetriebes 24 bzw. des Hauptantriebselement 22 überlagert werden. Mit anderen Worten, der Achsantrieb 20 ist mittels der Steuereinheit 42 derart betreibbar und/oder einstellbar und/oder verstellbar, dass eine Drehzahl am Ausgang des Hauptgetriebes 24 ermittelbar ist, ein Vorlauffaktors in Abhängigkeit von einem Lenkwinkel der ersten Fahrzeugachse 26 oder der ersten und zweiten Fahrzeugachse 26, 28 ermittelbar ist, eine Solldrehzahl des ersten Zusatzantriebselements 50 in Abhängigkeit von der Drehzahl am Ausgang des Hauptgetriebes 24 und einem Korrekturfaktor und dem Vorlauffaktor ermittelbar ist, und mittels der Steuereinheit 42 die Solldrehzahl des ersten Zusatzantriebselement 50 einstellbar und/oder verstellbar ist.

Die Steuereinheit 42 kann konfiguriert sein die Solldrehzahl des ersten Zusatzantriebselements 50 gemäss der folgenden Formel zu ermitteln, insbesondere zu berechnen:

$$N_Z = \left( \frac{N_{DDS}}{i_{AFWD}} * i_0 + \left( K * \frac{N_{DDS}}{i_{RA}} * \chi_{Vorlauf} * i_{FA} \right) * (1 - i_0) \right) * i_{Zusatz}$$

mit

$N_Z$ = Solldrehzahl des ersten Zusatzantriebselements
$N_{DDS}$ = Drehzahl am Ausgang des Hauptgetriebes
$i_{AFWD}$ = Übersetzung vom Ausgang Hauptgetriebe in das Leistungsverzweigungsgetriebe
$j_0$ = Standübersetzung des Leistungsverzweigungsgetriebes
$K$ = Korrekturfaktor
$\chi_{Vorlauf}$ = Vorlauffaktor
$i_{RA}$ = Übersetzung an oder zur zweiten Fahrzeugachse, insbesondere der Hinterachse
$i_{FA}$ = Übersetzung an oder zur ersten Fahrzeugachse, insbesondere der Vorderachse
$i_{Zusatz}$ = Übersetzung vom Ausgang der E-Maschine zum Leistungsverzweigungsgetriebe

Ausserdem kann ein Sicherheitsfaktor des Vorlaufs vorgesehen sein. Wird der Sicherheitsfaktor multiplikativ angewendet, ergibt sich die Formel für die Solldrehzahl wie folgt:

$$N_Z = \left( \frac{N_{DDS}}{i_{AFWD}} * i_0 + \left( K * \frac{N_{DDS}}{i_{RA}} * \chi_{Vorlauf} * \chi_{Sicherheit} * i_{FA} \right) * (1 - i_0) \right) * i_{Zusatz}$$

Mit

$\chi_{Sicherheit}$ = Sicherheitsfaktor des Vorlaufs

Vorteilhafterweise kann mit oder durch die Solldrehzahl der Vorlauf des Achsantriebs angepasst und so der Wendekreis reduziert werden. Darüber hinaus kann der Verschleiss der Reifen, insbesondere der Vorderräder/-reifen, reduziert werden.

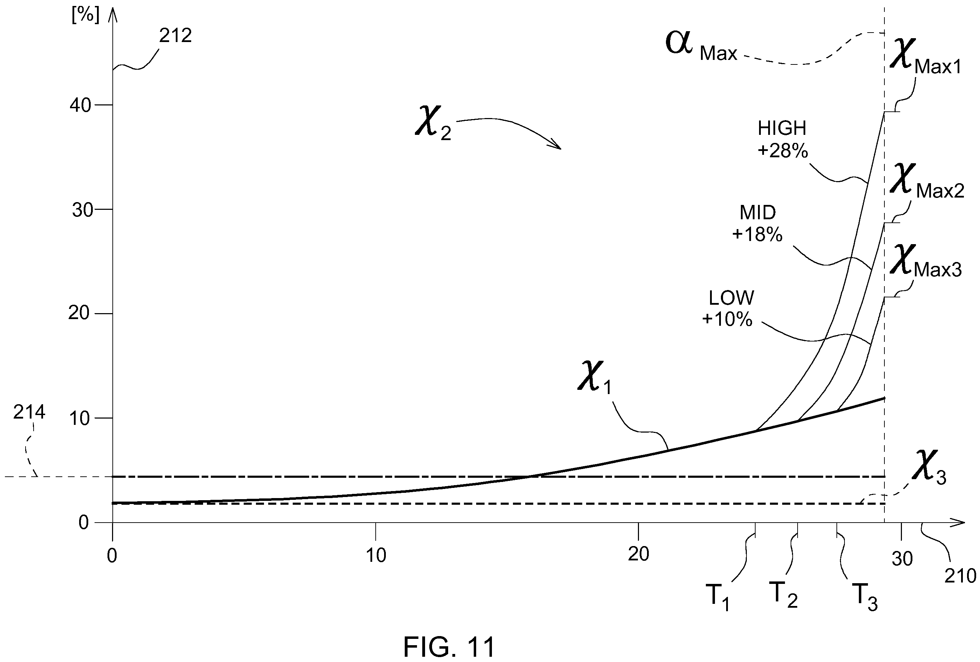

Der Vorlauffaktor $\chi_{Vorlauf}$ kann einen ersten und zweiten Vorlauffaktoranteil $\chi_1$, $\chi_2$ umfassen, wobei der erste Vorlauffaktoranteil $\chi_1$ in Abhängigkeit vom Lenkwinkel $\alpha$ ermittelbar ist und der zweite Vorlauffaktoranteil $\chi_2$ in Abhängigkeit von einem Lenkwinkelschwellwert T und in Abhängigkeit vom Lenkwinkel $\alpha$ ermittelbar ist (Details siehe Figur 11). Die Steuereinheit 42 kann also konfiguriert sein, den ersten Vorlauffaktoranteil $\chi_1$ in Abhängigkeit vom Lenkwinkel $\alpha$ zu ermitteln und den zweite Vorlauffaktoranteil $\chi_2$ in Abhängigkeit vom Lenkwinkelschwellwert T und in Abhängigkeit vom Lenkwinkel $\alpha$ zu ermitteln.

Der Vorlauffaktor $\chi_{Vorlauf}$ kann somit wie folgt ermittelt werden:

$$\chi_{Vorlauf} = \begin{cases} 1 + \left(\dfrac{\chi_1 + \chi_2}{100}\right) wenn\ \alpha \geq T \\ 1 + \dfrac{\chi_1}{100}\ mit\ \chi_2 = 0\ wenn\ \alpha < T \end{cases}$$

$\chi_1$ = Erster Vorlauffaktoranteil in Prozent bzw. Anteilen
$\chi_2$ = Zweiter Vorlauffaktoranteil in Prozent bzw. Anteilen
$T$ = Lenkwinkelschwellwert
$\alpha$ = Lenkwinkel, insbesondere ermittelter oder erfasster bzw. gemessener Lenkwinkel an der ersten oder ersten und zweiten Fahrzeugachse.

Der Vorlauffaktor kann, wenn ein Sicherheitsfaktor vorgesehen ist, wie folgt ermittelt werden:

$$\chi_{Vorlauf} = \begin{cases} 1 + \dfrac{(\chi_1 + \chi_2 + \chi_3)}{100} wenn\ \alpha \geq T \\ 1 + \dfrac{(\chi_1 + \chi_3)}{100}\ mit\ \chi_2 = 0\ wenn\ \alpha < T \end{cases}$$

Mit
$\chi_3$ = Sicherheitsfaktor
Der Fahrer bzw. Bediener kann beispielsweise mit der Ein- und Ausgabeeinheit 44 oder einer Displayschnittstelle oder einem zusätzlichen Schalter den gewünschten Vorlauf $\chi_{Vorlauf}$, insbesondere $\chi_1$ und/oder $\chi_2$ und/oder $\chi_3$ einstellen. Im Speziellen kann der Fahrer optional auch ein Vielfaches, beispielsweise 2x, 3x oder höhere Faktoren, des gewünschten Vorlauf $\chi_{Vorlauf}$, insbesondere $\chi_1$ und/oder $\chi_2$ und/oder $\chi_3$ einstellen. Ebenso kann der Vorlauf $\chi_{Vorlauf}$, insbesondere $\chi_1$ und/oder $\chi_2$ und/oder $\chi_3$, mit der Ein- und Ausgabeeinheit 44 oder der Displayschnittstelle oder dem zusätzlichen Schalter auch vollständig deaktiviert oder aktiviert werden.
Figur 2 zeigt eine schematische Darstellung des ersten Ausführungsbeispiels des erfindungsgemässen leistungsverzweigten Achsantriebs 20. Der in Figur 2 gezeigte Achsantrieb 20 entspricht im Wesentlichen dem in Figur 1 gezeigten leistungsverzweigten Achsantrieb 20, sodass im Folgenden lediglich auf Details und/oder Unterschiede eingegangen wird. Das landwirtschaftliche Zugfahrzeug 10 kann den leistungsverzweigten Achsantrieb 20, wie in Figur 2 dargestellt, umfassen. Der leistungsverzweigte Achsantrieb 20 für ein landwirtschaftliches Zugfahrzeug 10 umfasst ein erstes Zusatzantriebselement 50, die erste Fahrzeugachse 26, die zweite Fahrzeugachse 28 und das Hauptantriebselement 22 zur Bereitstellung einer Drehbewegung und/oder einer Kraft und/oder eines Drehmoments, welches mit einer ersten Welle W1 auf das Hauptgetriebe 24 übertragbar ist. Das Hauptgetriebe 24 ist also über die oder mit der ersten Welle W1 mit dem Hauptantriebselement 22 verbunden, insbesondere antreibbar verbunden. Die zweiten Fahrzeugachse 28 ist mit dem Hauptgetriebe 24 verbunden. Dabei ist die zweite Fahrzeugachse 28 mit der Drehbewegung und/oder der Kraft und/oder dem Drehmoment des Hauptantriebselements 22 wenigstens über das Hauptgetriebe 24 antreibbar. Im Speziellen ist die zweiten Fahrzeugachse 28 über eine oder mit einer dritte Welle W3 mit dem Hauptgetriebe 24 verbunden. Der leistungsverzweigte Achsantrieb 20 umfasst weiter ein Leistungsverzweigungsgetriebe 52. Das Leistungsverzweigungsgetriebe 52 kann über einen oder mit einem ersten Stirnradsatz 54 mit der dritten Welle W3 verbunden sein. Ausserdem ist die erste Fahrzeugachse 26 über eine oder mit einer zweiten Welle W2 mit dem das Leistungsverzweigungsgetriebe 52 verbunden.
Das erste Zusatzantriebselement 50 kann über ein erstes oder mit einem ersten Schaltelement 56 mit dem Leistungsverzweigungsgetriebe 52 verbindbar oder verbunden sein. Der leistungsverzweigte Achsantrieb 20 kann auch ein Speicherelement 62 umfassen. Das Speicherelement 62 ist dabei optional vorgesehen. Das erste Zusatzantriebselement 50 kann über eine Verbindungsleitung 64 mit dem Speicherelement 62 leistungselektronisch verbunden sein.
In einem Fahrbetrieb oder Schubbetrieb des Zugfahrzeugs 10 und/oder des leistungsverzweigten Achsantriebs 20 erzeugt das Hauptantriebselement 22 eine Drehbewegung und/oder eine Kraft und/oder ein Drehmoment, welche durch die erste Welle W1 in das Hauptgetriebe 24 eingeleitet wird. Die in das Hauptgetriebe 24 eingeleitete Drehbewegung und/oder eine Kraft und/oder ein Drehmoment erfährt in dem Hauptgetriebe 24 eine Übersetzung, soweit eine Gangstufe beziehungsweise eine Fahrstufe eingelegt ist. Der Ort, an dem eine Drehbewegung und/oder eine Kraft und/oder ein Drehmoment in das Hauptgetriebe 24 eingeleitet wird, wird als Getriebeeingang eingezeichnet, wobei der Ort, an dem unter Berücksichtigung des Übersetzungsverhältnisses eine resultierende Drehbewegung und/oder eine resultierende Kraft und/oder ein resultierendes Drehmoment anliegt, wird als Getriebeausgang bezeichnet. In dem in Fig. 2 gezeigten Beispiel sind Getriebeeingang und Getriebeausgang des Hauptgetriebes 24 einander gegenüberliegend angeordnet. Die bei eingelegter Gangstufe beziehungsweise Fahrstufe vorliegende Drehbewegung und/oder die vorliegende Kraft und/oder das vorliegende Drehmoment am Getriebeausgang des Hauptgetriebes 24 wird über die dritte Welle W3 in die zweite Fahrzeugachse 28 eingeleitet. Darüber hinaus wird die Drehbewegung und/oder die Kraft und/oder das Drehmoment des Hauptantriebselements 22 über das Hauptgetriebe 24 von der zweiten Welle W2 über den ersten Stirnradsatz 54 in das Leistungsverzweigungsgetriebe 52 eingeleitet oder übertragen.

Das erste Zusatzantriebselement 50 kann motorisch betrieben werden und somit ein Vorlauf der ersten Fahrzeugachse eingestellt werden. Dabei kann eine zusätzliche Drehzahl und/oder eine zusätzliche Kraft und/oder ein zusätzliches Drehmoment des ersten Zusatzantriebselement 50 an das Leistungsverzweigungsgetriebe 52 übertragen werden, wenn das erste Schaltelement 56 geschlossen ist. Die an das Leistungsverzweigungsgetriebe 52 übertragene Drehzahl und/oder Kraft und/oder das übertragene Drehmoment des Hauptantriebselements 22 und die an das Leistungsverzweigungsgetriebe 52 übertragene Drehzahl und/oder Kraft und/oder das übertragene Drehmoment des ersten Zusatzantriebselements 50 können mit dem Leistungsverzweigungsgetriebe 52 überlagert werden und eine resultierende Drehzahl und/oder eine resultierende Kraft und/oder ein resultierendes Drehmoment auf die erste Fahrzeugachse 26 übertragbar sein. Vorteilhafterweise kann so ein Vorlauf der ersten Fahrzeugachse 26 steuerbar und/oder regelbar, insbesondere einstellbar und/oder verstellbar sein. Das erste Zusatzantriebselement 50 wirkt also auf das Leistungsverzweigungsgetriebe 52 derart ein, dass eine Drehzahl und/oder eine Kraft und/oder ein Drehmoment, also ein Vorlauf, der ersten Fahrzeugachse verändert wird.

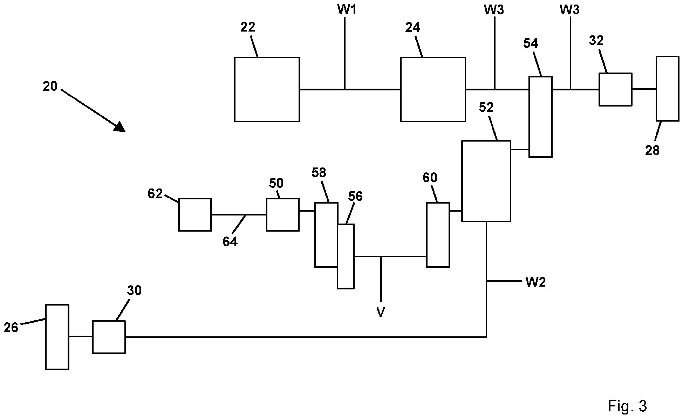

Figur 3 zeigt eine schematische detaillierte Darstellung eines zweiten Ausführungsbeispiels des erfindungsgemässen leistungsverzweigten Achsantriebs 20. Der in Figur 3 gezeigte leistungsverzweigte Achsantrieb 20 entspricht im Wesentlichen dem in den Figuren 1 bis 2 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 3 dargestellt, umfassen. Der leistungsverzweigte Achsantrieb 20 umfasst ein erstes Differential 30, insbesondere ein Vorderachsdifferential. Das erste Differential 30 ist über die zweite oder mit der zweiten Welle W2 mit dem Leistungsverzweigungsgetriebe 52 verbunden, insbesondere antreibbar verbunden. Der leistungsverzweigte Achsantrieb 20 umfasst ein zweites Differential 32, insbesondere ein Hinterachsdifferential. Das zweite Differential 32 ist über die dritte oder mit der dritten Welle W3 mit dem Hauptgetriebe 24 verbunden, insbesondere antreibbar verbunden. Der leistungsverzweigte Achsantrieb 20 umfasst zusätzlich eine Vorgelegewelle V. Das erste Zusatzantriebselement 50 ist über das erste oder mit dem ersten Schaltelement 56 mit der Vorgelegewelle V verbindbar, bevorzugt antreibbar verbindbar. Ebenso ist das Leistungsverzweigungsgetriebe 52 mit der Vorgelegewelle V verbunden, insbesondere antreibbar verbunden. Ausserdem umfasst der leistungsverzweigte Achsantrieb 20 einen zweiten Stirnradsatz 58. Das erste Schaltelement 56 ist dabei über den oder mit dem zweiten Stirnradsatz 58 mit dem ersten Zusatzantriebselement 50 verbunden, bevorzugt antreibbar verbunden. Die Vorgelegewelle V ist mit dem ersten oder über das erste Schaltelement 56 mit dem zweiten Stirnradsatz 58 verbindbar oder verbunden. Das erste Schaltelement 56 ist dabei derart betätigbar, insbesondere schliessbar, dass der zweite Stirnradsatz 58 über das erste oder mit dem ersten Schaltelement 56 mit der Vorgelegewelle V verbunden ist. Ebenso ist, wenn das erste Schaltelement 56 geöffnet ist, keine Drehzahl und/oder keine Kraft und/oder kein Drehmoment des ersten Zusatzantriebselements 50 an oder in die Vorgelegewelle V übertragbar oder einleitbar. Der leistungsverzweigte Achsantrieb 20 umfasst ausserdem einen dritten Stirnradsatz 60. Das Leistungsverzweigungsgetriebe 52 ist über den oder mit dem dritten Stirnradsatz 60 mit der Vorgelegewelle V verbunden, insbesondere antreibbar verbunden sein. Mit dem dritten Stirnradsatz 60 kann eine Drehbewegung und/oder eine Kraft und/oder ein Drehmoment von der Vorgelegewelle V an oder in das Leistungsverzweigungsgetriebe 52 übertragen oder eingeleitet werden.

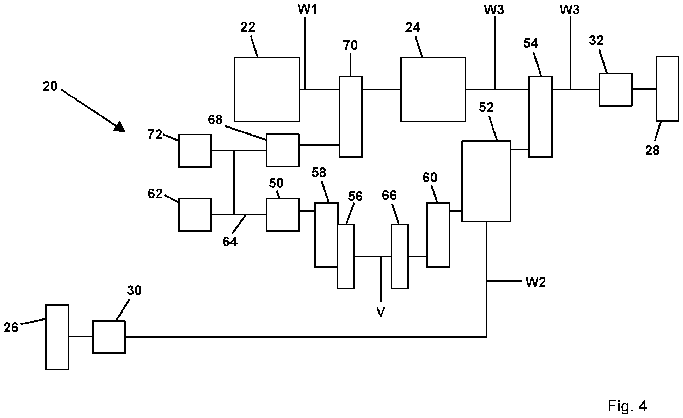

Figur 4 zeigt eine schematische Darstellung eines dritten Ausführungsbeispiels des erfindungsgemässen leistungsverzweigten Achsantriebs 20. Der in Figur 4 gezeigte Achsantrieb 20 entspricht im Wesentlichen dem in den Figuren 1 bis 3 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 4 dargestellt, umfassen. Der leistungsverzweigte Achsantrieb 20 umfasst zusätzlich eine erste Bremse 66. Die erste Bremse 66 ist zwischen dem ersten Zusatzantriebselement 50 und dem Leistungsverzweigungsgetriebe 52 angeordnet, insbesondere auf der Vorgelegewelle V angeordnet. Die erste Bremse 66 ist mit der Vorgelegewelle V drehfest verbunden. Die Vorgelegewelle V ist mit der ersten Bremse 66 lösbar gegen Drehung haltbar. Dabei kann die Vorgelegewelle V mit der ersten Bremse 66 lösbar, beispielsweise mit einem Getriebegehäuse oder einem Rahmen, verbindbar sein. Der leistungsverzweigte Achsantrieb 20 kann ein zweites Zusatzantriebselement 68 umfassen. Das zweite Zusatzantriebselement 68 ist mit dem Hauptantriebselement 22 über oder mit der ersten Welle W1 verbunden, bevorzugt antreibbar verbunden. Das durch das Hauptantriebselement 22 erzeugbare Drehmoment und/oder die erzeugbare Kraft und/oder die erzeugbare Drehzahl ist über eine Übersetzungsstufe 70 in oder an das zweite Zusatzantriebselement einleitbar oder übertragbar sein. Das zweite Zusatzantriebselement 68 ist über die Verbindungsleitung 64 mit dem Speicherelement 62 und dem ersten Zusatzantriebselement 50 leistungselektronisch verbunden. Das zweite Zusatzantriebselement 68 ist ausserdem über die Verbindungsleitung 64 mit einem Nebenabtrieb 72 leistungselektronisch verbunden. Der Nebenabtrieb 72 ist dabei, ebenso wie das Speicherelement 62, optional vorgesehen. Darüber hinaus sind jedoch auch Ausführungen mit mehr als einem Nebenabtrieb 72 denkbar. Wie bereits erwähnt, kann erzeugte elektrische Energie beziehungsweise gespeicherte elektrische Energie dem Speicherelement 62 zugeführt oder entnommen oder den Verbrauchern, beispielsweise dem ersten Zusatzantriebselement 50, dem Nebenabtrieb 72 und/oder dem zweiten Zusatzelement 68 durch die Verbindungsleitung 64 zugeführt werden kann. Die mit dem Hauptantriebselement 22 erzeugte Drehbewegung beziehungsweise die erzeugte Kraft und/oder das erzeugte Drehmoment wird, insbesondere mit der Übersetzungsstufe 70, bevorzugt dem vierten Stirnradsatz, und/oder der ersten Welle W1 in das zweite Zusatzantriebselement 68 und/oder das Hauptgetriebe 24 eingeleitet werden. Das zweite Zusatzantriebselement 68 kann in diesem Fall generatorisch betrieben werden, das heißt, dass die, insbesondere durch die Übersetzungsstufe 70 und/oder die erste Welle W1, eingeleitete Energie in Form der Drehzahl und/oder der Kraft und/oder des Drehmoments in elektrische Energie umgewandelt wird. Diese elektrische Energie kann zum Betreiben des (elektrischen) Nebenabtriebs 72 verwendet werden und/oder elektrische Energie kann in dem optionalen Speicherelement 62 gespeichert werden und/oder das erste Zusatzantriebselement 50 kann motorisch betrieben werden. Soweit das zweite Zusatzantriebselement 68 generatorisch betrieben wird, wird elektrische Energie erzeugt. Diese kann zum Betreiben des Nebenabtriebs 72 verwendet und/oder in dem Speicherelement 62 gespeichert werden. Zum Laden des Speicherelements 62 können beispielsweise aber auch das erste Zusatzantriebselement 50 und/oder das zweite Zusatzantriebselement 68, insbesondere im Fahr- oder Schubbetrieb, generatorisch betrieben werden. Das zweite Zusatzantriebselement 68 kann zusätzlich zu der durch das Hauptantriebselement 22 eingeleiteten Drehbewegung und/oder Kraft und/oder Drehmoment ebenfalls eine Drehbewegung und/oder Kraft und/oder Drehmoment einleiten, insbesondere über die Übersetzungsstufe, insbesondere den vierten Stirnradsatz, in die erste Welle W1 einleiten. Dazu kann das zweite Zusatzantriebselement 68 motorisch betrieben werden. Somit kann beispielsweise kurzzeitig eine Erhöhung der Antriebsleistung erfolgen, soweit dies durch den jeweiligen Fahrzustand erforderlich ist.

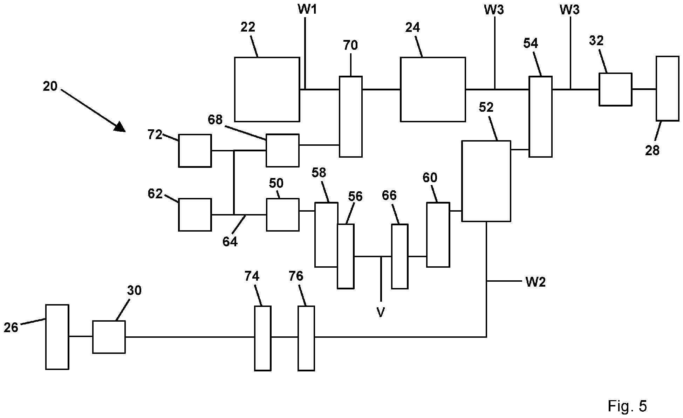

Figur 5 zeigt eine schematische Darstellung eines vierten Ausführungsbeispiels des erfindungsgemässen leistungsverzweigten Achsantriebs 20. Der in Figur 5 gezeigte Achsantrieb 20 entspricht im Wesentlichen dem in den Figuren 1 bis 4 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 5 dargestellt, umfassen. Auf oder an der zweiten Welle W2 sind ein zweites Schaltelement 74 und eine zweite Bremse 76 angeordnet. Das zweite Schaltelement 74 und die zweite Bremse 76 sind zwischen dem Leistungsverzweigungsgetriebe 52 und der ersten Fahrzeugachse 26 angeordnet sein. Das zweite Schaltelement 74 ist dabei zwischen der zweiten Bremse 76 und der ersten Fahrzeugachse 26 angeordnet. Das Leistungsverzweigungsgetriebe 52 ist über das zweite oder mit dem zweiten Schaltelement 74 mit der ersten Fahrzeugachse 26, und insbesondere dem ersten Differential 30, verbindbar, bevorzugt lösbar verbindbar, besonders bevorzugt lösbar drehfest und/oder lösbar antreibbar verbindbar. Die zweite Bremse 76 ist zwischen dem zweiten Schaltelement 74 und dem Leistungsverzweigungsgetriebe 52 angeordnet. Die zweite Bremse 76 ist auf der zweiten Welle W2 angeordnet. Die zweite Welle W2 ist mit der zweiten Bremse 76 lösbar, beispielsweise mit einem Getriebegehäuse oder einem Rahmen, lösbar gegen Drehung haltbar. Hierdurch kann die zweite Welle W2 in Bezug auf eine Drehbewegung gehalten oder gehemmt werden. Mit der zweiten Bremse 76 und dem zweiten Schaltelement 74 können mit dem leistungsverzweigten Achsantrieb die oben beschriebenen Betriebsmodi realisiert werden. Das zweite Schaltelement 74 ist als eine zweite Kupplung ausgebildet. Das zweite Schaltelement 74 kann auf einer Seite drehfest mit der zweiten Welle W2 verbunden sein und auf einer anderen Seite mit einem anderen Teil der zweiten Welle W2 und somit mit dem Leistungsverzweigungsgetriebe 52 verbindbar sein. Die zweite Bremse 76 kann auf einer Seite mit der zweiten Welle W2 verbunden sein und auf einer anderen Seite beispielsweise mit dem Getriebegehäuse oder Rahmen verbunden sein. Hierdurch kann die zweite Welle W2 in Bezug auf eine Drehbewegung gehemmt und/oder gehalten werden.

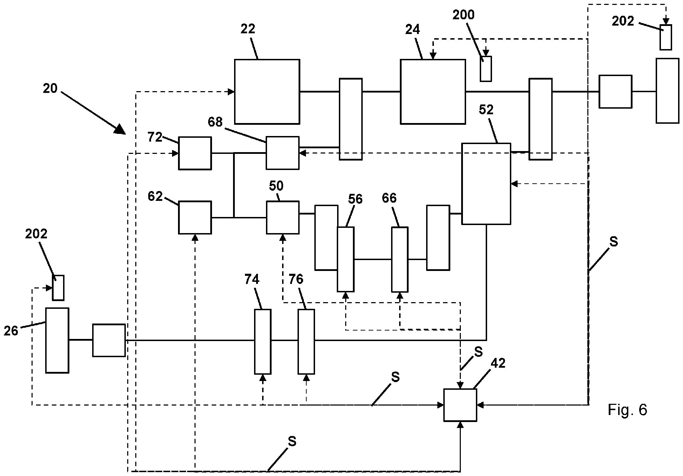

Figur 6 zeigt eine schematische Darstellung eines fünften Ausführungsbeispiels des erfindungsgemässen leistungsverzweigten Achsantriebs 20. Der in Figur 6 gezeigte Achsantrieb 20 entspricht im Wesentlichen dem in den Figuren 1 bis 5 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 6 dargestellt, umfassen. Dem leistungsverzweigten Achsantrieb 20 ist zumindest eine Steuereinheit 42 zugeordnet, insbesondere kann der leistungsverzweigte Achsantrieb 20 die Steuereinheit 42 umfassen. Ausserdem umfasst der leistungsverzweigte Achsantrieb 20 einen ersten Sensor 200 zur Erfassung der Drehzahl am Ausgang des Hauptgetriebes 24 und/oder einen zweiten Sensor 202 zur Erfassung des Lenkwinkels der ersten Fahrzeugachse 26 oder zwei zweiten Sensoren 202 zur Erfassung des Lenkwinkels der ersten und zweiten Fahrzeugachse 26, 28. Die Steuereinheit 42 kann konfiguriert sein, mit dem ersten und/oder zweiten Sensorsignal eine Drehzahl am Ausgang des Hauptgetriebes 24 und/oder einen Lenkwinkel zu ermitteln. Die Steuereinheit 42 ist über mehrere Steuerleitungen S, bevorzugt über bidirektionale Steuerleitungen, mit dem ersten und/oder zweiten Zusatzantriebselement 50, 68 und/oder dem Nebenabtrieb 72 und/oder dem Speicherelement 62 und/oder dem ersten und/oder zweiten und/oder dritten Schaltelement 56, 74, 130 und/oder dem Hauptantriebselement 22 und/oder dem Hauptgetriebe 24 und/oder dem Leistungsverzweigungsgetriebe 52 und/oder einer ersten und/oder zweiten Bremse 66, 76 und/oder dem ersten und/oder zweiten Sensor 200, 202 zur Steuerung und/oder Regelung und/oder deren Ansteuerung verbunden, und ist insbesondere mit diesen signalverbunden und/oder signalübertragend und/oder datenleitend verbunden. Die Steuereinheit 42 ist derart ausgebildet, dass der leistungsverzweigte Achsantrieb 20, insbesondere die oben genannten Komponenten des leistungsverzweigten Achsantriebs 20, in Abhängigkeit von einem Betriebsmodus des leistungsverzweigten Achsantrieb 20 und/oder Fahrzeugs 10 ansteuerbar sind. Insbesondere die oben genannten Betriebsmodi "Generator" und/oder "Vorlauf" und/oder "Voll-Elektrisch" und/oder "Parkbremse" und/oder "Fahrzeugachsen-Bremse" können mit der Steuereinheit 42 ansteuerbar sein.

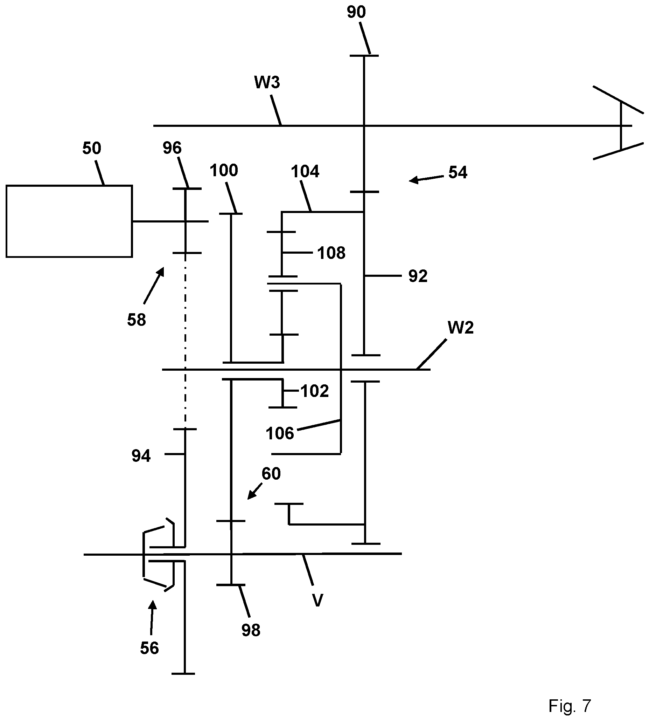

Figur 7 zeigt eine detaillierte schematische Darstellung eines sechsten Ausführungsbeispiels des erfindungsgemässen leistungsverzweigten Achsantriebs 20, insbesondere des Leistungsverzweigungsgetriebes 52 und des ersten Zusatzantriebselement 50. Der in Figur 7 gezeigte leistungsverzweigte Achsantrieb 20 entspricht im Wesentlichen dem in den Figuren 1 bis 6 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 7 dargestellt, umfassen. Der erste Stirnradsatz 54 umfasst ein erstes Zahnradpaar, insbesondere ein erstes und ein zweites Festrad 90, 92. Das erste Festrad 90 ist mit der dritten Welle W3 und das zweite Festrad 92 mit dem Leistungsverzweigungsgetriebe 52 verbunden. Der zweite Stirnradsatz 58 umfasst ein zweites Zahnradpaar, insbesondere ein erstes Schaltrad 94 und ein drittes Festrad 96. Das dritte Festrad 96 ist mit dem ersten Zusatzantriebselement 50, insbesondere einer Abtriebswelle des ersten Zusatzantriebselements 50 verbunden. Das erste Schaltrad 94 ist drehbar auf der Vorgelegewelle V gelagert, insbesondere frei drehbar und/oder axial verschiebbar auf der Vorgelegewelle V gelagert sein. Das erste Schaltrad 94 ist mit einer Seite des ersten Schaltelements 56 verbunden, bevorzugt drehfest und/oder antreibbar verbunden sein. Das erste Schaltelement 56 ist also über das erste oder mit dem ersten Schaltrad 94 und über das dritte oder mit dem dritten Festrad 96 mit dem ersten Zusatzantriebselement 50 verbunden. Die Vorgelegewelle V wiederum ist mit dem ersten oder über das erste Schaltelement 56 und das erste Schaltrad 94 mit dem dritten Festrad 96 verbunden. Der dritte Stirnradsatz 60 umfasst ein drittes Zahnradpaar, insbesondere ein viertes und ein fünftes Festrad 98, 100. Das vierte Festrad 98 ist mit der Vorgelegewelle V drehfest verbunden und auf der Vorgelegewelle V angeordnet. Das fünfte Festrad 100 ist mit dem Leistungsverzweigungsgetriebe 52, insbesondere einem Sonnenrad 102 des Leistungsverzweigungsgetriebe 52, verbunden.

Das Leistungsverzweigungsgetriebe 52 ist als Planetengetriebe ausgeführt. Ein Hohlrad 104 des Leistungsverzweigungsgetriebes 52 ist über den oder mit dem ersten Stirnradsatz 54 mit der dritten Welle W3 verbunden. Das Hohlrad 104 ist mit dem zweiten Festrad 92 verbunden, bevorzugt drehfest verbunden. Dadurch ist eine Kraft und/oder eine Drehbewegung und/oder ein Drehmoment vom Hauptantriebselement 22 über das Hauptgetriebe 24 an die dritte Welle W3 und weiter über den ersten Stirnradsatz 54 an das Hohlrad 104 und somit insbesondere das Leistungsverzweigungsgetriebe 52 bzw. das Planetengetriebe übertragbar sein. Die erste Fahrzeugachse 26 ist über oder mit der zweiten Welle W2 mit einem Planetenträger 106 beziehungsweise einem Steg des Leistungsverzweigungsgetriebes 52 verbunden. Der Planetenträger 106 ist mit der zweiten Welle W2 verbunden, bevorzugt drehfest verbunden. Dadurch ist eine Kraft und/oder eine Drehbewegung und/oder ein Drehmoment vom Leistungsverzweigungsgetriebes 52 über den Planetenträger 106 auf die zweite Welle W2 und weiter, insbesondere über das erste Differential 30, an die erste Fahrzeugachse 26 übertragbar. An dem Planetenträger 106 ist ein Planetensatz, insbesondere eines oder mehrere Planetenräder 108, drehbar gelagert, die jeweils mit Sonnenrad 102 und Hohlrad 104 kämmen, sich also insbesondere in ständigem Kämmeingriff mit diesen befinden. Der Planetensatz kann insbesondere einen Satz von Planetenrädern 108 aufweisen. Der Planetensatz kann drei Planetenräder 108 umfassen. Darüber hinaus ist das Sonnenrad 102 des Leistungsverzweigungsgetriebes 52 über das fünfte Festrad 100 und das vierte Festrad 98, und insbesondere weiter über die Vorgelegewelle V und das Schaltelement und den zweiten Stirnradsatz, mit dem ersten Zusatzantriebselement verbunden, insbesondere antreibbar verbunden.

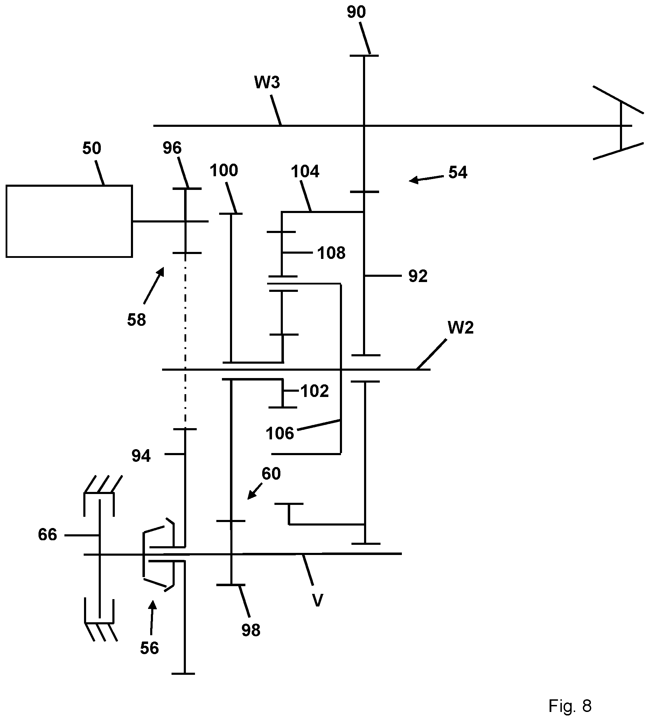

Figur 8 zeigt eine detaillierte schematische Darstellung eines siebten Ausführungsbeispiels des erfindungsgemässen leistungsverzweigten Achsantriebs 20, insbesondere des Leistungsverzweigungsgetriebes 52 und des ersten Zusatzantriebselement 50. Der in Figur 8 gezeigte leistungsverzweigte Achsantrieb 20 entspricht im Wesentlichen dem in den Figuren 1 bis 7 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 8 dargestellt, umfassen. Die erste Bremse 66 ist auf der Vorgelegewelle V angeordnet. Die erste Bremse 66 ist mit der Vorgelegewelle V verbunden, bevorzugt mit der Vorgelegewelle V antreibbar verbunden, besonders bevorzugt mit der Vorgelegewelle V drehfest und/oder antreibbar verbunden. Wenn die erste Bremse 66 betätigt, also insbesondere geschlossen ist, arbeitet das Leistungsverzweigungsgetriebe 52 mit einem festen Verhältnis, also vollständig mechanisch. Das Leistungsverzweigungsgetriebe 52 kann dann das Bremsmoment von der ersten Fahrzeugachse 26 auf die Fahrzeugbremse oder Hinterachsbremse (an der zweiten Fahrzeugachse 28) übertragen. Ebenso kann mit der ersten Bremse 66 mehr mechanische Kraft auf die erste Fahrzeugachse 26 übertragen werden.

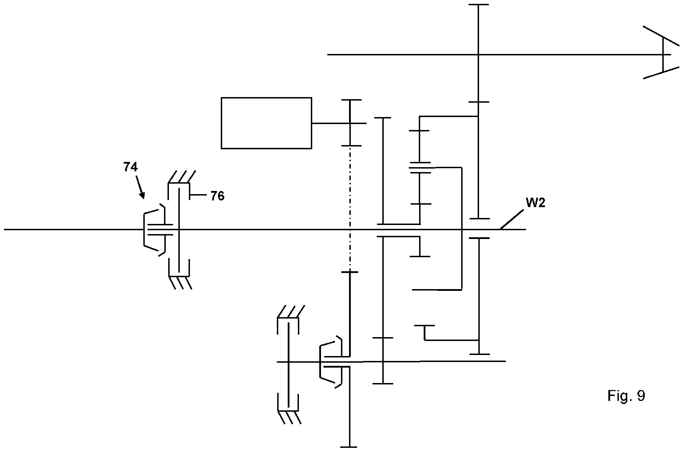

Figur 9 zeigt eine detaillierte schematische Darstellung eines achten Ausführungsbeispiels des erfindungsgemässen leistungsverzweigten Achsantriebs 20. Der in Figur 9 gezeigte Achsantrieb 20 entspricht im Wesentlichen dem in den Figuren 1 bis 8 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 9 dargestellt, umfassen. Das zweite Schaltelement 74 und die zweite Bremse 76 sind auf der zweiten Welle W2 zwischen Leistungsverzweigungsgetriebe 52 und erster Fahrzeugachse 26 angeordnet.

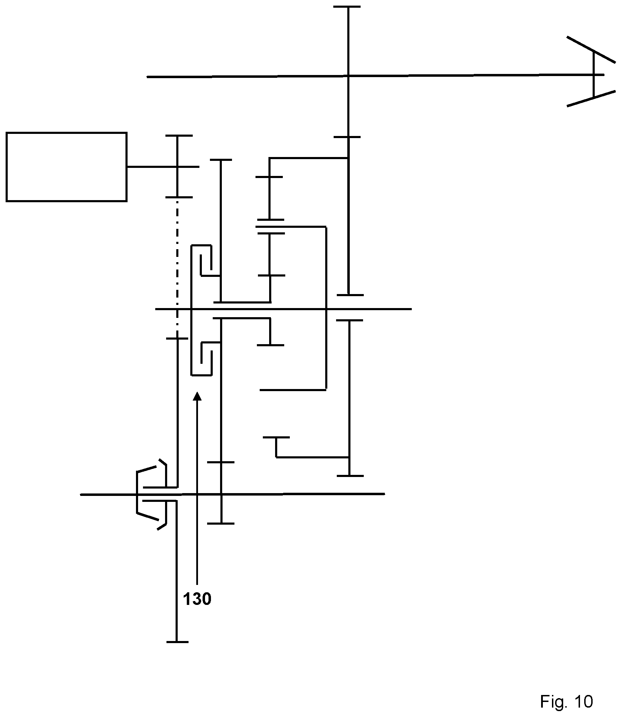

Figur 10 zeigt eine detaillierte schematische Darstellung eines neunten Ausführungsbeispiels des erfindungsgemässen leistungsverzweigten Achsantriebs 20. Der in Figur 10 gezeigte Achsantrieb 20 entspricht im Wesentlichen dem in den Figuren 1 bis 9 gezeigten leistungsverzweigten Achsantrieb 20, sodass im Folgenden lediglich auf Details und/oder Unterschiede eingegangen wird. Das landwirtschaftliche Fahrzeug 10 kann den leistungsverzweigten Achsantrieb 20, wie in Figur 10 dargestellt, umfassen.

Das Leistungsverzweigungsgetriebe 52 umfasst alternativ anstatt der ersten Bremse 66 ein fünftes Schaltelement 130. Das dritte Schaltelement 130 ist als dritte Kupplung ausgebildet. Das fünfte Festrad 100 und/oder das Sonnenrad 102 sind über das geschlossene dritte Schaltelement 130 mit der zweiten Welle W2 drehfest verbunden. Die erste und zweite Fahrzeugachse 26, 28 werden somit beide mechanisch durch das Hauptantriebselement 22 angetrieben. Im Speziellen ist die relative Geschwindigkeit des Sonnenrads 102 und der zweiten Welle W2 0 (Null) Umdrehungen pro Minute. Das führt dazu, dass Hohlrad 104 sich mit der gleichen Geschwindigkeit dreht wie das Sonnenrad 102 und die zweite Welle W2.

Figur 11 zeigt eine schematische Darstellung des Verlaufs des Vorlauffaktors in Abhängigkeit vom Lenkwinkel des erfindungsgemässen leistungsverzweigten Achsantriebs 20 und Zugfahrzeugen 10 gemäss einer der Figuren 1 bis 10. Der Vorlauffaktor $\chi_{Vorlauf}$ kann in allen in den Figuren 1 bis 10 gezeigten leistungsverzweigten Achsantrieben 20 und Fahrzeugen 10 angewendet und wie gezeigt berechnet werden. Figur 16 zeigt auf der Abszisse (X-Achse) 210 den Lenkwinkel in Grad und auf der Ordinate (Y-Achse) 212 den Vorlauf in Prozent. Die horizontale Gerade 214 zeigt den Vorlauf bei einem konstanten Vorlauffaktor. Der Vorlauffaktor $\chi_{Vorlauf}$ kann zwei oder drei Vorlauffaktoranteil aufweisen, wobei der erste Vorlauffaktoranteil $\chi_1$ nur von Lenkwinkel $\alpha$ abhängt und der zweite Vorlauffaktoranteil $\chi_2$ vom Lenkwinkel $\alpha$ und dem Lenkwinkelschwellwert $T$ abhängt. Ausserdem kann der Vorlauffaktor den Sicherheitsfaktor $\chi_3$ umfassen, der additiv angewendet wird.

Der zweite Vorlauffaktor kann beispielsweise basierend auf einer quadratischen Funktion wie in Figur 16 dargestellt gemäss

$$\chi_2 = \begin{cases} \left( (\alpha - T)^2 * \dfrac{\chi_{Max}}{(\alpha_{Max} - \alpha)^2} \right) wenn\ \alpha \geq T \\ 0\ wenn\ \alpha < T \end{cases}$$

ermittelbar sein.

Mit:

$\chi_2$ = Zweiter Vorlauffaktoranteil

$T$ = Lenkwinkelschwellwert

$\alpha$ = Lenkwinkel, insbesondere erfasster bzw. gemessener Lenkwinkel an der ersten oder ersten und zweiten Fahrzeugachse.

$\chi_{Max}$ = Maximaler zweiter Vorlauffaktoranteil

$\alpha_{Max}$ = Maximaler Lenkwinkel

Aufgrund des zweiten Vorlauffaktoranteils kann somit ein zusätzlicher Vorlauf in Abhängigkeit vom Lenkwinkel und einem Lenkwinkelschwellwert ermittelt und angewendet werden. Vorteilhafterweise kann der zusätzliche Vorlauf das landwirtschaftliche Zugfahrzeug während einer Kurvenfahrt um die Kurve ziehen, wodurch der Wendekreis nochmals verkleinert wird. Darüber hinaus können die oben genannten Vorteil erreicht werden. Der zweite Vorlauffaktoranteil kann auch in Abhängigkeit von zwei oder mehreren Lenkwinkelschwellwerten $T_1, T_2, T_3$, insbesondere mit der Steuereinheit, ermittelbar sein. Jedem Schwellwert kann dabei ein anderer maximaler zweiter Vorlauffaktoranteil zugeordnet sein:

| $T_1$ | $\chi_{Max1}$ |
|---|---|
| .. | .. |
| $T_n$ | $\chi_{Maxn}$ |

wobei gilt $T_1 < .. < T_n$ in Grad und $\chi_{Max1} > .. > \chi_{Maxn}$ in Prozent oder Anteilen. Die Werte für $T_1, .., T_n$ in Grad und $\chi_{Max1}, ..., \chi_{Maxn}$ können mit der Ein- und Ausgabeeinheit 44 auch eingegeben oder in einer Nachschlagetabelle (engl. Look-up table) auf der Steuereinheit 42 gespeichert sein.

Vorteilhafterweise kann aufgrund des zweiten Vorlauffaktoranteils ein zusätzlicher Vorlauf der ersten Fahrzeugachse in Abhängigkeit vom Lenkwinkel und einem Lenkwinkelschwellwert ermittelt und angewendet werden, der beispielsweise das Zugfahrzeug während einer Kurvenfahrt um die Kurve zieht und so den Wendekreis verkleinert.

Ausserdem können aufgrund des Lenkwinkelschwellwertes und/oder des maximalen zweiten Vorlauffaktoranteil verschiedene Stufen der Anwendung des zusätzlichen Vorlaufs, beispielsweise ein "Aggressivität" des zusätzlichen Vorlaufs, definiert werden.

**Patentansprüche**

1. Leistungsverzweigter Achsantrieb für ein Zugfahrzeug (10) umfassend eine Steuereinheit (42), ein erstes Zusatzantriebselement (50), das mit der Steuereinheit (42) verbunden ist, eine erste Fahrzeugachse (26), eine zweite Fahrzeugachse (28) und ein Hauptantriebselement (22) zur Bereitstellung eines Drehmoments, welches mit einer ersten Welle (W1) auf ein Hauptgetriebe (24) übertragbar ist, wobei das Hauptgetriebe (24) mit der zweiten Fahrzeugachse (28) verbunden ist, und der Achsantrieb (20) ein Leistungsverzweigungsgetriebe (52) aufweist, und das Leistungsverzweigungsgetriebe (52) mit der zweiten Fahrzeugachse (28) und dem Hauptgetriebe (24) verbunden ist und über eine zweite Welle (W2) mit der ersten Fahrzeugachse (26) verbunden ist, und wobei das erste Zusatzantriebselement (50) mit dem Leistungsverzweigungsgetriebe (52) verbunden ist,
**dadurch gekennzeichnet, dass** die Steuereinheit (42) konfiguriert ist:

   eine Drehzahl am Ausgang des Hauptgetriebes (24) zu ermitteln, und
   einen Vorlauffaktor ($\chi_{Vorlauf}$) in Abhängigkeit von einem Lenkwinkel ($\alpha$) der ersten Fahrzeugachse (26) zu ermitteln, und
   eine Solldrehzahl des ersten Zusatzantriebselements (50) in Abhängigkeit von der Drehzahl des Hauptgetriebes (24) und einem Korrekturfaktor (K) und dem Vorlauffaktor ($\chi_{Vorlauf}$) zu ermitteln, und
   eine Steuer-Operation am leistungsverzweigten Achsantrieb (20) in Abhängigkeit von der Solldrehzahl durchzuführen.

2. Leistungsverzweigter Achsantrieb nach Anspruch 1, **dadurch gekennzeichnet, dass** die die Steuer-Operation die folgenden Schritte umfasst:
die Solldrehzahl des ersten Zusatzantriebselements (50) zu steuern und/oder zu regeln, insbesondere einzustellen und/oder zu verstellen.

3. Leistungsverzweigter Achsantrieb nach Anspruch 1 oder 2, **dadurch gekennzeichnet, dass** der Achsantrieb (20) einen ersten Sensor (200) zur Erfassung der Drehzahl an einem Ausgang des Hauptgetriebes (24) umfasst, und/oder der Achsantrieb (20) einen zweiten Sensor (202) zur Erfassung des Lenkwinkels ($\alpha$) umfasst.

4. Leistungsverzweigter Achsantrieb nach mindestens einem der vorangehenden Ansprüche, **dadurch gekennzeichnet, dass** der Vorlauffaktor ($\chi_{Vorlauf}$) einen ersten und zweiten Vorlauffaktoranteil ($\chi_1$, $\chi_2$) umfasst, wobei der erste Vorlauffaktoranteil ($\chi_1$) in Abhängigkeit vom Lenkwinkel ($\alpha$) ermittelbar ist und der zweite Vorlauffaktoranteil ($\chi_2$) in Abhängigkeit von einem Lenkwinkelschwellwert (T) und in Abhängigkeit vom Lenkwinkel ($\alpha$) ermittelbar ist.

5. Leistungsverzweigter Achsantrieb nach Anspruch 4, **dadurch gekennzeichnet, dass** der zweite Vorlauffaktoranteil ($\chi_2$) in Abhängigkeit von zwei oder mehreren Lenkwinkelschwellwerten (T) ermittelbar ist.

6. Leistungsverzweigter Achsantrieb nach mindestens einem der vorangehenden Ansprüche, **dadurch gekennzeichnet, dass** der leistungsverzweigte Achsantrieb (20) eine Vorgelegewelle (V) umfasst, wobei das erste Zusatzantriebselement (50) (50) über das erste Schaltelement (56) mit der Vorgelegewelle (V) verbindbar ist und/oder der leistungsverzweigte Achsantrieb (20) einen zweiten und dritten Stirnradsatz (58, 60) umfasst, wobei das erste Schaltelement (56) über den zweiten Stirnradsatz (58) mit dem ersten Zusatzantriebselement (50) verbindbar ist, und die Vorgelegewelle (V) über den dritten Stirnradsatz (60) mit dem Leistungsverzweigungsgetriebe (52) verbunden ist.

7. Leistungsverzweigter Achsantrieb nach mindestens einem der vorangehenden Ansprüche, **dadurch gekennzeichnet, dass** das Leistungsverzweigungsgetriebe (52) als Planetengetriebe ausgebildet ist.

8. Leistungsverzweigter Achsantrieb nach mindestens einem der vorangehenden Ansprüche, **dadurch gekennzeichnet, dass** die erste Fahrzeugachse (26) zwei oder mehrere erste Reifen oder Räder (36, 38) umfasst und die zweite Fahrzeugachse zwei oder mehrere zweite Reifen oder Räder (36, 40) umfasst.

9. Leistungsverzweigter Achsantrieb nach Anspruch 8, **dadurch gekennzeichnet, dass** die Steuereinheit (42) konfiguriert ist:

den Radius des ersten Reifens in Abhängigkeit von einem zurückgelegten Weg des ersten Reifens und einer Drehzahl der ersten Fahrzeugachse (26) zu ermitteln und/oder zu kalibrieren, und
der Radius des zweiten Reifens in Abhängigkeit von einem zurückgelegten Weg des zweiten Reifens und einer Drehzahl der zweiten Fahrzeugachse (28) zu ermitteln und/oder zu kalibrieren.

10. Leistungsverzweigter Achsantrieb nach Anspruch 8 oder 9, **dadurch gekennzeichnet, dass** der Radius des ersten Reifens ein konstanter Wert und der Radius des zweiten Reifens ein konstanter Wert ist, und die Steuereinheit (42) konfiguriert ist den Korrekturfaktor (K) mit den konstanten Werten der Radien zu ermitteln, oder
die Steuereinheit (42) konfiguriert ist:

den Radius der ersten Reifens zu ermitteln und/oder zu kalibrieren, und/oder den Radius der zweiten Reifen zu ermitteln und/oder zu kalibrieren,
den Korrekturfaktor mit dem Radius des ersten und dem Radius des zweiten Reifens zu ermitteln.

11. Leistungsverzweigter Achsantrieb nach mindestens einem der vorangehenden Ansprüche, **dadurch gekennzeichnet, dass** die Steuereinheit (42) konfiguriert ist, ein Vorderachsdrehmoment zu ermitteln, und das Vorderachsdrehmoment mit einem Drehmomentlimit zu vergleichen, und die Solldrehzahl des ersten Zusatzantriebselements (50) in Abhängigkeit vom Drehmomentlimit zu steuern und/oder zu regeln, insbesondere einzustellen und/oder zu verstellen.

12. Landwirtschaftliches Zugfahrzeug umfassend einen leistungsverzweigten Achsantrieb (20) nach einem der Ansprüche 1 bis 11.

13. Landwirtschaftliches Zugfahrzeug nach Anspruch 12, **dadurch gekennzeichnet, dass** der leistungsverzweigte Achsantrieb (20) zum Antreiben des Fahrzeugs (10) ausgebildet ist.

14. Verfahren zum Betreiben eines leistungsverzweigten Achsantriebs (20) nach einem der Ansprüche 1 bis 11.

15. Verfahren zum Betreiben eines leistungsverzweigten Achsantriebs (20) nach Anspruch 14, wobei das Verfahren die folgenden Schritte umfasst:

Ermitteln einer Drehzahl am Ausgang des Hauptgetriebe (24),
Ermittelns eines Vorlauffaktors ($\chi_{Vorlauf}$) in Abhängigkeit von einem Lenkwinkel ($\alpha$) der ersten Fahrzeugachse (26) oder der ersten und zweiten Fahrzeugachse (26, 28),
Ermitteln einer Solldrehzahl des ersten Zusatzantriebselements (50) in Abhängigkeit von der Drehzahl des Hauptgetriebes (24) und einem Korrekturfaktor und dem Vorlauffaktor ($\chi_{Vorlauf}$),
Durchführen einer Steuer-Operation am leistungsverzweigten Achsantrieb, insbesondere dem ersten Zusatzantriebselement (50), in Abhängigkeit von der Solldrehzahl.

FIG. 1

EP 4 592 119 A1

Fig. 2

W1    W3    W3
22    24    54    32

20

52

62    50    58    60
56
64

30    V
26

W2

Fig. 3

Fig. 4

Fig. 5

Fig. 6

Fig. 7

Fig. 8

Fig. 9

**130**

Fig. 10

FIG. 11

Europäisches
Patentamt

European
Patent Office

Office européen
des brevets

# EUROPÄISCHER RECHERCHENBERICHT

Nummer der Anmeldung

EP 25 15 1626

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>A | EP 4 215 392 A1 (DEERE & CO [US])<br>26. Juli 2023 (2023-07-26)<br>* Absätze [0014], [0019], [0049],<br>[0058], [0067]; Abbildungen 1, 4, 10 *<br>- - - - - | 1-3,6-8,<br>12-15<br>4,5,9-11 | INV.<br>B60K17/346<br>B60K6/365<br>B60K6/387<br>B60K6/442 |
| A | DE 10 2013 224383 A1 (ZAHNRADFABRIK<br>FRIEDRICHSHAFEN [DE])<br>28. Mai 2015 (2015-05-28)<br>* das ganze Dokument *<br>- - - - - | 1-15 | B60K6/48<br>B60K6/52<br>B60K23/08 |
| A | JP 2007 045177 A (YANMAR CO LTD)<br>22. Februar 2007 (2007-02-22)<br>* Absätze [0026], [0029]; Abbildungen 1-4<br>*<br>- - - - - | 1-15 | |

RECHERCHIERTE
SACHGEBIETE (IPC)

B60K

Der vorliegende Recherchenbericht wurde für alle Patentansprüche erstellt

| Recherchenort | Abschlußdatum der Recherche | Prüfer |
|---|---|---|
| München | 10. Juni 2025 | Gubovits, János |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

...........................................................................................

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 15 1626

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-2025

| Im Recherchenbericht angeführtes Patentdokument | Datum der Veröffentlichung | Mitglied(er) der Patentfamilie | Datum der Veröffentlichung |
|---|---|---|---|
| EP 4215392 A1 | 26-07-2023 | EP 4215392 A1<br>EP 4417451 A2 | 26-07-2023<br>21-08-2024 |
| DE 102013224383 A1 | 28-05-2015 | KEINE | |
| JP 2007045177 A | 22-02-2007 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007021732 A1
- EP 3626502 A1
- DE 102013224383 A1
- EP 4215392 A1
- EP 4215393 A1